# EUROPEAN PATENT SPECIFICATION

(11) **EP 3 326 898 B1**
(45) Date of publication and mention of the grant of the patent: **17.04.2019**
(21) Application number: 17203755.8
(22) Date of filing: 27.11.2017
(51) Int. Cl.: B62M 7/04, B62K 11/04

(54) **STRADDLED VEHICLE**
GRÄTSCHSITZFAHRZEUG
VÉHICULE DU TYPE À SELLE

(30) Priority: 28.11.2016 JP 2016230194
(43) Date of publication of application: 30.05.2018
(73) Proprietor: Yamaha Hatsudoki Kabushiki Kaisha, Iwata-shi Shizuoka 438-8501 (JP)
(72) Inventor: TAKEMOTO, Yasushi, Iwata-shi, Shizuoka 438-8501 (JP)
(74) Representative: Grünecker Patent- und Rechtsanwälte PartG mbB

(56) References cited:
- EP-A1- 2 703 613
- WO-A1-2016/098900
- US-A1- 2006 174 848
- US-A1- 2009 013 953

## Description

This invention relates to a straddled vehicle having a variable valve mechanism.

JP 2012-137048 A discloses a two-wheeled motor vehicle having a variable valve mechanism. The variable valve mechanism has an actuator. The actuator is a solenoid. The actuator is attached to a cylinder head. Specifically, the actuator is attached to a side wall of a peripheral wall portion of the cylinder head. Another example of a similar construction is shown in US 2009/013953.

However, since in the conventional example the actuator is attached to the cylinder head, the cylinder head becomes large-sized. Specifically, when the actuator is attached to the cylinder head, it is necessary to make the cylinder head high. That is, it is necessary to increase the length of the cylinder head in an up-down direction. The higher the cylinder head is made, the larger the cylinder head becomes.

This will be described in more detail. To make the cylinder head high is, to put it otherwise, to make the peripheral wall portion of the cylinder head high. The cylinder head has a plurality of valve spring seats. The seats are arranged inside the peripheral wall portion. Each seat is formed aslant according to a valve included angle. In a direction perpendicular to the seat is a tool path of the seat. The higher the peripheral wall portion is, the more easily does the peripheral wall portion interfere with (intersect) the tool path of the seat. For example, the tool paths of some seats extend forward and upward, while the tool paths of the other seats extend rearward and upward. In this case, especially a front wall and a rear wall of the peripheral wall portion tend to interfere with the tool paths of the seats. In order to avoid the interference between the peripheral wall portion and the tool paths of the seats, it is necessary to arrange the front wall in a further forward position, and the rear wall in a further rearward position. In other words, it is necessary to enlarge the spacing between the front wall and some seats and between the rear wall and the other seats. Because of such manufacturing requirements, the higher peripheral wall portion results in the larger spacing between the front wall and the rear wall (hereinafter called as appropriate "fore and aft size of the cylinder head"). Thus, the higher the cylinder head is, the larger becomes the fore and aft size of cylinder head.

Further, the entire engine will also become large when the cylinder head becomes large.

It is an objects of the present invention to provide a straddled vehicle which can reduce the size of an engine while having a variable valve mechanism including an actuator.

According to the present invention said object is solved by a straddled vehicle having the features of independent claim 1. Preferred embodiments are laid down in the dependent claims.

It has been considered on making the entire engine small by attaching the actuator to a head cover joined with the peripheral wall portion of the cylinder head. That is, if a peripheral wall portion of the head cover is made high to an extent for attaching the actuator thereto, the peripheral wall portion of the cylinder head can be made lower by an amount corresponding to an increase in the height of the peripheral wall portion of the cylinder cover. Then, the above-noted manufacturing requirements can be satisfied even with a reduction in the fore and aft size of the cylinder head. As a result, the cylinder head can be made smaller. By making the cylinder head still smaller, the entire engine can be made still smaller.

Incidentally, a straddled vehicle of the sport type or the street type often employs a frame form using the engine as a skeletal strengthening member. Since, in this type of frame form, the engine serves as part of the frame, a down frame extending from a head tube through an area forward of the engine to an area below the engine is often omitted. On the other hand, a pair of right and left main frames extending rearward and downward from the head tube and passing above the engine in a side view of the vehicle tend to be arranged in low positions for reasons of securing strength property. As a result, the main frames in many cases overlap the head cover in the side view of the vehicle (JP 2009-107652 A, for example).

It has been found that, when the actuator is attached to the head cover in the straddled vehicle employing the above frame form, there is a possibility of hampering cooling of the actuator. Since the head cover is connected to an upper part of the cylinder head, when the actuator is attached to the head cover, the actuator is disposed in a high position, compared with the conventional example in which the actuator is attached to the cylinder head. In other words, when the actuator is attached to the head cover, compared with the conventional example, the actuator is disposed in a position still closer to the upper end of the engine. In the side view of the vehicle, therefore, the actuator overlaps the main frames relatively easily, and the actuator is easily disposed between the pair of main frames.

In particular, the actuator is disposed in a still higher position when, in the side view of the vehicle, the angle of a cylinder axis of the engine is 45 degrees or larger to a horizontal line, and in the side view of the vehicle, the center of the actuator is disposed rearward of the cylinder axis. As a result, the actuator can be positioned between the main frames all the more easily.

Since various members are arranged between the main frames, the space there tends to be narrow and tends to trap engine heat. Consequently, the actuator disposed between the main frames gives rise to a problem that the actuator cannot positively radiate the heat.

With the straddled vehicle of the sport type or the street type, cooling of the engine is particularly important. When heat radiation of the actuator is hampered, it will have an adverse effect also on cooling of the engine. Conversely, cooling the actuator appropriately will provide an advantage also in cooling of the engine.

It has been considered a construction which, even when the straddled vehicle has the above arrangement or construction, can cool the actuator appropriately and does not impair the performance of the straddled vehicle of the sport type or the street type.

Accordingly, the present teaching provides the following construction.

A straddled vehicle, according to this invention, comprises:
an engine having a cylinder unit; and
a body frame for supporting the engine;
the body frame including:
   a head tube having at least part thereof located forward and upward of the engine;
   a right frame extending rearward and downward from the head tube; and
   a left frame disposed leftward of the right frame and extending rearward and downward from the head tube;
the right frame including a right main frame disposed above the engine in a side view of the vehicle;
the left frame including a left main frame disposed above the engine in the side view of the vehicle;
the cylinder unit including:
   a cylinder member having a cylinder bore centering on a cylinder axis extending upward and forward at an angle of 45 degrees or larger to a horizontal line in the side view of the vehicle;
   a cylinder head connected to an upper part of the cylinder member, and having ports formed therein for communicating with the cylinder bore;
   a head cover connected to an upper part of the cylinder head, and forming a valve operating chamber with the cylinder head;
   a valve operating device disposed in the valve operating chamber for opening and closing the ports; and
   a variable valve mechanism having an actuator for changing opening and closing conditions of the valve operating device;
the actuator having an actuator body disposed outside the valve operating chamber; wherein
the body frame is not disposed forward of a front wall of each of the cylinder member, the cylinder head, and the head cover, and does not overlap the each front wall in a front view of the vehicle;
the actuator body is attached to the head cover;
the actuator body has a center thereof located rearward of the cylinder axis in the side view of the vehicle; and
the cylinder unit is inclined so that the actuator body overlap neither the right main frame nor the left main frame in the side view of the vehicle.

The actuator body is attached to the head cover. The height of the head cover (that is, the length of the head cover in an up-down direction) becomes large to such an extent that the actuator body can be attached thereto. The height of the cylinder head (that is, the length of the cylinder head in the up-down direction) can be reduced by an amount corresponding to an increase in the height of the head cover. By checking the height of the cylinder head, the fore and aft size of the cylinder head can be reduced. By reducing the size of the cylinder head, the entire engine can be reduced in size. Thus, by attaching the actuator body to the head cover, the engine can be reduced in size even though the engine has the actuator.

The head cover is connected to an upper part of the cylinder head. The actuator body is therefore located in a high position. In other words, the actuator body is located in a position near the upper end of the engine (cylinder unit).

The cylinder axis extends upward and forward at an angle of 45 degrees or larger to the horizontal line in the side view of the vehicle. The center of the actuator body is located rearward of the cylinder axis in the side view of the vehicle. The actuator body is therefore located in a still higher position.

The body frame is not disposed forward of the front wall of each of the cylinder member, the cylinder head, and the head cover. The body frame does not overlap each front wall of the cylinder member, the cylinder head, and the head cover in the front view of the vehicle. With such a frame form (frame structure), the right main frame and left main frame can easily be arranged in low positions, respectively, in order to secure strength.

As noted above, the actuator body is disposed in a high position. On the other hand, the right main frame and left main frame tend be arranged in low positions. Therefore, the actuator body, at a glance, appears to overlap easily at least one of the right main frame and left main frame in the side view of the vehicle.

However, as a result of intensive research, inventor has acquired findings that the cylinder unit can be inclined further forward by making effective use of the above construction of the body frame. That is, the body frame is not disposed in a space forward of each front wall of the cylinder member, the cylinder head, and the head cover. Inventor has found that, by using this space, it is easy to incline the cylinder unit further forward.

Further, inventor has acquired findings that the position of the actuator can be changed efficiently by making effective use of the construction of the actuator. Since the actuator body is attached to the head cover, the actuator body is disposed in a high position, as noted hereinbefore. The actuator body being disposed in a high position is disadvantageous in that the actuator body can easily overlap at least one of the right main frame and the left main frame in the side view of the vehicle. However, when the cylinder unit is inclined further forward, the position of the actuator body is effectively shifted forward. This is because the actuator body is disposed in a high position. Consequently, when selecting or changing the position of the actuator body by adjusting the posture of the cylinder unit, the actuator body being in the high position provides an advantage in that the position of the actuator can be changed efficiently. Thus, inventor has found that the arrangement of the actuator, which appears disadvantageous, can be used to advantage.

Further, the position of the actuator can be changed all the more efficiently by making effective use of the arrangement of the cylinder axis and the actuator. As noted hereinbefore, the cylinder axis extends upward and forward at an angle of 45 degrees or larger to the horizontal line in the side view of the vehicle, and the center of the actuator body is located rearward of the cylinder axis in the side view of the vehicle. According to the "arrangement of the cylinder axis and the actuator", the actuator body is located in a still higher position. Consequently, the "arrangement of the cylinder axis and the actuator" is disadvantageous in being still easier for the actuator body to overlap at least one of the right main frame and left main frame in the side view of the vehicle. However, when the cylinder unit is inclined further forward, an amount the actuator body shifts forward is larger than an amount the actuator body shifts downward. Its reason lies in the above "arrangement of the cylinder axis and the actuator". Therefore, only by slightly changing the forward inclination angle of the cylinder unit, the position of the actuator body can be shifted a large extent forward. Thus, when selecting or changing the position of the actuator body by adjusting the posture of the cylinder unit, the "arrangement of the cylinder axis and the actuator" provides an advantage in that the position of the actuator can be changed still more efficiently. Thus, inventor has found that the "arrangement of the cylinder axis and the actuator", which appears disadvantageous, can be used to advantage.

Accordingly, it is further provided the following construction. That is, the cylinder unit is inclined so that the actuator body overlap neither the right main frame nor the left main frame in the side view of the vehicle. In other words, the cylinder unit is installed in such a posture that the actuator body overlaps neither the right main frame nor the left main frame in the side view of the vehicle.

Since the actuator body is not located between the right main frame and left main frame, the actuator body can radiate heat conveniently. That is, the actuator body can be cooled well. Further, since the body frame is not disposed forward of each front wall of the cylinder member, cylinder head, and head cover, and the body frame does not overlap each front wall in the front view of the vehicle, the forward inclination angle of the cylinder unit can easily be selected or changed. Further, since the actuator body is attached to the head cover, the position of the actuator body can be changed efficiently while checking an amount of change in the forward inclination angle of the cylinder unit. Further, since the cylinder axis extends upward and forward at an angle of 45 degrees or larger to the horizontal line in the side view of the vehicle, and the center of the actuator body is located rearward of the cylinder axis in the side view of the vehicle, the position of the actuator body can be changed all the more efficiently while further checking an amount of change in the forward inclination angle of the cylinder unit.

An amount the center of gravity position of the engine shifts downward with a change in the forward inclination angle of the cylinder unit is relatively small. Specifically, when the cylinder unit inclines further forward, an amount the center of gravity position of the engine shifts downward is small compared with an amount the actuator body shifts forward. Therefore, with the straddled vehicle of the sport type or the street type employing the above-noted frame form, the change in the inclination of the cylinder unit can conveniently be inhibited from affecting the ride performance (controllability) of the straddled vehicle.

According to this teaching, as described above, even when the engine has the variable valve mechanism including the actuator, the engine can conveniently be reduced in size. Further, the present teaching can provide a construction which can cool the actuator appropriately and does not impair the performance of the straddled vehicle of the sport type or the street type.

In the above straddled vehicle, it is preferred that, in the side view of the vehicle, the actuator body is spaced in an up-down direction from one of the right main frame and the left main frame. Since the actuator body is spaced in the up-down direction from one of the right main frame and the left main frame, at a time of maintenance, for example, the actuator can be detached and attached without interfering with the right main frame and the left main frame. Thus, the maintainability of the actuator can be promoted.

In the above straddled vehicle, it is preferred that, in the side view of the vehicle, the actuator body is spaced in a direction along the cylinder axis from one of the right main frame and the left main frame. Since the actuator body is spaced in the direction along the cylinder axis from one of the right main frame and the left main frame, at a time of maintenance, for example, the actuator can be detached and attached without interfering with the right main frame and the left main frame. Thus, the maintainability of the actuator can be promoted.

In the above straddled vehicle, it is preferred that, in plan view, the actuator body overlaps one of the right main frame and the left main frame. An interval in a transverse direction of the right main frame and left main frame can be made small. Consequently, the right main frame, left main frame, and engine can be arranged compactly.

In the above straddled vehicle, it is preferred that the cylinder head and the head cover form a cam chain chamber therebetween; the cam chain chamber is disposed on one side of the valve operating chamber in a transverse direction of the straddled vehicle; and the actuator body is disposed on the other side of the valve operating chamber in the transverse direction. Since there is little possibility that the actuator body interferes with members (e.g. a cam chain and others) provided in the cam chain chamber, the actuator body can be installed conveniently.

In the above straddled vehicle, it is preferred that the body frame includes a cross member extending over the engine in the transverse direction of the straddled vehicle to connect the right main frame and the left main frame; and the engine is supported only by the right frame, the left frame, and the cross member. With such construction, the right main frame and left main frame are often arranged in low positions, respectively. The actuator body therefore tends all the more easily to overlap at least one of the right main frame and left main frame in the side view of the vehicle. However, even in such a case, according to this invention, the actuator body can be disposed in a position not overlapping either the right main frame or the left main frame in the side view of the vehicle. Thus, even when it is easy to produce a problem that the actuator body overlaps at least one of the right main frame and left main frame in the side view of the vehicle, this invention can solve this problem. The more easily the above problem is produced, the higher usefulness this invention demonstrates.

In the above straddled vehicle, it is preferred that the straddled vehicle comprises fastening members fastened to the engine for the body frame to support the engine; and the fastening members are visible in the side view of the vehicle. Since the fastening members are visible in the side view of the vehicle, at a time of maintenance, for example, the engine can easily be detached from and attached to the body frame. Thus, the maintainability of the engine can be improved.

In the above straddled vehicle, it is preferred that the right main frame has a sectional outer shape which is oblong and approximately polygonal; and the left main frame has a sectional outer shape which is oblong and approximately polygonal. Since the right main frame and left main frame have such a construction, the actuator body all the more easily overlaps at least one of the right main frame and left main frame in the side view of the vehicle. However, even in such a case, according to this invention, the actuator body can be disposed in a position not overlapping either the right main frame or the left main frame in the side view of the vehicle.

In the above straddled vehicle, it is preferred that the head cover includes a front portion located forward of the cylinder axis in the side view of the vehicle; and a rear portion located rearward of the cylinder axis in the side view of the vehicle; in the side view of the vehicle, the front portion of the head cover does not overlap the right main frame or the left main frame; and in the side view of the vehicle, part of the rear portion of the head cover overlaps at least one of the right main frame and the left main frame. The right main frame and left main frame are arranged in positions so close to the engine that part of the rear portion of the head cover overlaps at least either the right main frame or the left main frame. The actuator body therefore all the more easily overlaps at least one of the right main frame and left main frame in the side view of the vehicle. However, even in such a case, according to this teaching, the actuator body can be disposed in a position not overlapping either the right main frame or the left main frame in the side view of the vehicle.

In the above straddled vehicle, it is preferred that the valve operating device includes inlet valves arranged rearward of the cylinder axis in the side view of the vehicle for opening and closing the ports; and the actuator changes opening and closing conditions of the inlet valves. With such a construction, the actuator body is often disposed such that the center of the actuator body is located rearward of the cylinder axis in the side view of the vehicle. This invention is therefore conveniently applicable to such a construction.

In the above straddled vehicle, it is preferred that the actuator includes a mounting element disposed outside the valve operating chamber, and connected to the actuator body, for attaching the actuator body to the head cover. Since the actuator has the mounting element, the actuator body can conveniently be detached from and attached to the head cover at a time of maintenance, for example. Consequently, even if the actuator body is disposed in a high position, it can conveniently prevent impairment of the maintainability of the actuator.

In the above straddled vehicle, it is preferred that the actuator body includes an electromagnetic solenoid. Since the actuator body includes the electromagnetic solenoid, it can change the opening and closing conditions of the valve operating device conveniently.

In the above straddled vehicle, it is preferred that the number of cylinder bores of the cylinder member is one. In other words, the engine preferably is a single-cylinder engine. Thus, the engine can be further reduced in size.

In the above straddled vehicle, it is preferred that the straddled vehicle comprises an air cleaner disposed above the engine. Since the air cleaner is disposed above the engine, streams of air do not easily flow through the space around the engine. Even in such a case, since the actuator body can be disposed in a position not overlapping either the right main frame or the left main frame in the side view of the vehicle, the actuator can be cooled conveniently.

In the above straddled vehicle, it is preferred that the straddled vehicle comprises a fuel tank disposed above the engine. Since the fuel tank is disposed above the engine, streams of air do not easily flow through the space around the engine. Even in such a case, since the actuator body can be disposed in a position not overlapping either the right main frame or the left main frame in the side view of the vehicle, the actuator can be cooled conveniently.

For the purpose of illustrating the present teaching, there are shown in the drawings several forms which are presently preferred.
Fig. 1 is a left side view of a straddled vehicle according to an embodiment.
Fig. 2 is a plan view of a portion of the straddled vehicle.
Fig. 3 is a plan view of the portion of the straddled vehicle.
Fig. 4 is a right side view of the portion of the straddled vehicle.
Fig. 5 is a sectional view of a right main frame taken on line V-V of Fig. 4.
Fig. 6 is a view in vertical section of a cylinder head and a head cover.
Fig. 7A is a perspective view of a first inlet rocker arm and a second inlet rocker arm.
Fig. 7B is a perspective view of the first inlet rocker arm and the second inlet rocker arm.
Fig. 8 is a front view of a portion of the straddled vehicle.
Fig. 9 is a right side view of a portion of the straddled vehicle.
Fig. 10 is a front view of a portion of a straddled vehicle according to a modified embodiment.
Fig. 11 is a front view of a portion of a straddled vehicle according to a modified embodiment.

A straddled vehicle according to a preferred embodiment will be described hereinafter with reference to the drawings.

### 1. Outline construction of the straddled vehicle

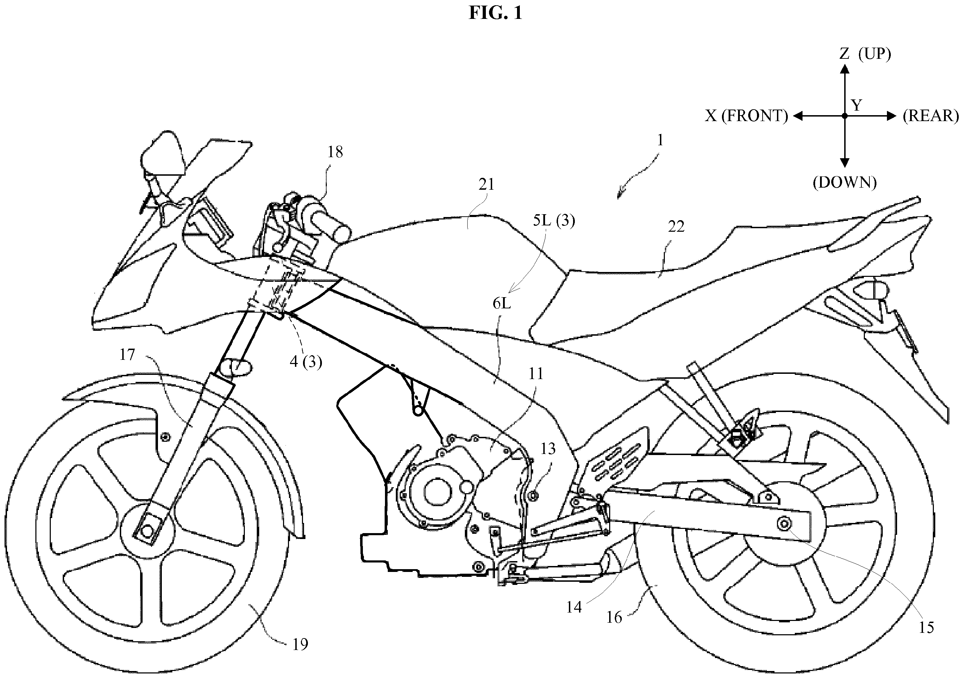

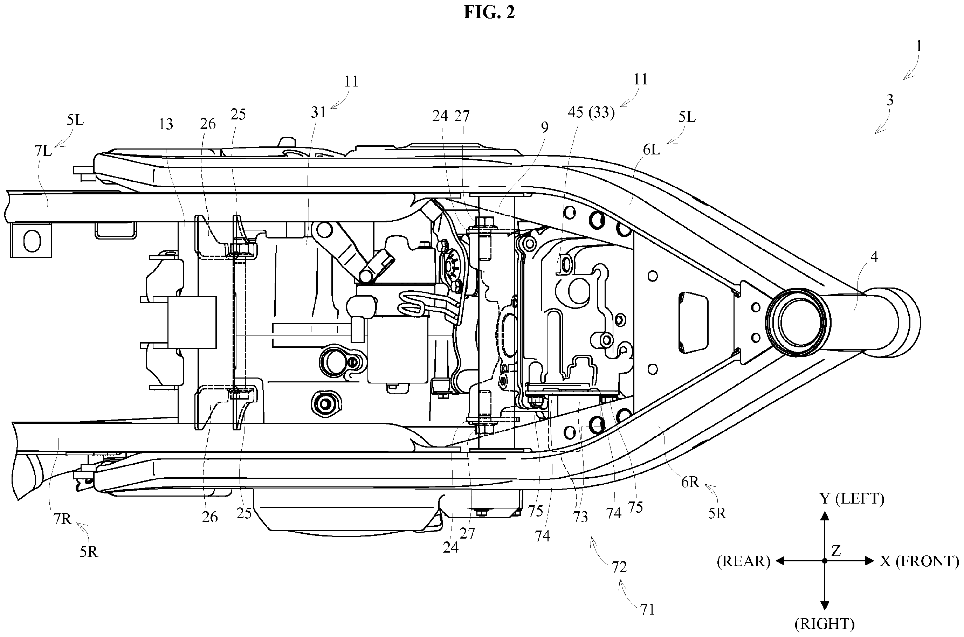

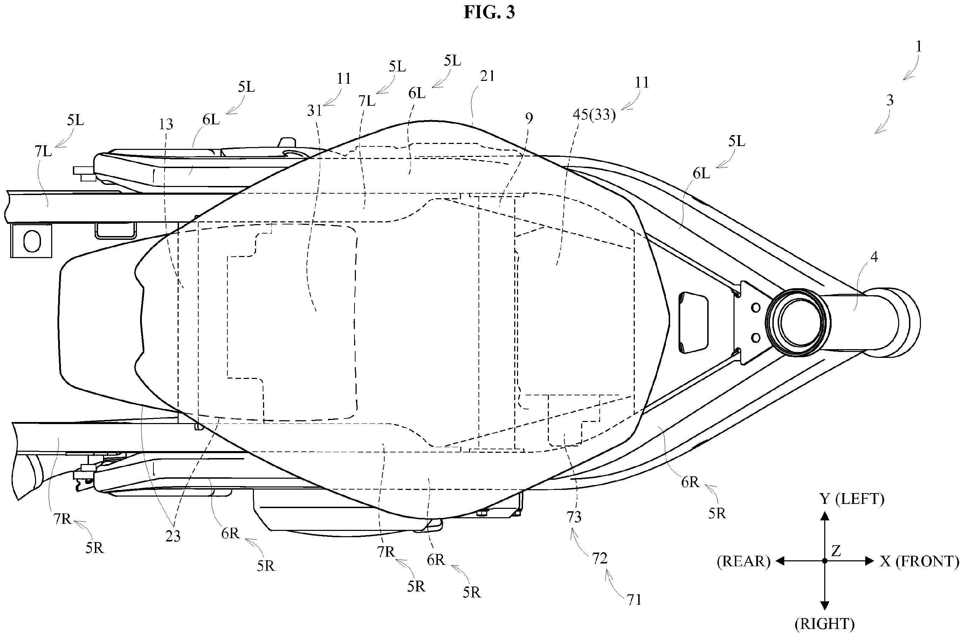

Fig. 1 is a left side view of a straddled vehicle according to an embodiment. Figs. 2 and 3 are each a plan view of a portion of the straddled vehicle according to the embodiment. Fig. 2 omits illustration of a fuel tank, air cleaner, seat, and so on. Fig. 3 omits illustration of the seat, and so on.

Figs. 1 and 2 show a longitudinal direction X, a transverse direction Y, and an up-down direction Z of a straddled vehicle 1. The longitudinal direction X, transverse direction Y, and up-down direction Z are defined with reference to a rider mounted on the straddled vehicle 1. The longitudinal direction X, transverse direction Y, and up-down direction Z are perpendicular to one another.

The terms "forward", "rearward", "upward", "downward", rightward", and "leftward" mean "forward", "rearward", "upward", "downward", rightward", and "leftward" as seen from the rider mounted on the straddled vehicle 1. In this specification, unless otherwise specified, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z.

The drawings show, by way of reference, forward, rearward, upward, downward, rightward, and leftward as appropriate.

The straddled vehicle 1 is a street type vehicle. The straddled vehicle 1 has a body frame 3 and an engine 11. Fig. 1 shows parts of the body frame 3 in broken lines. The body frame 3 supports the engine 11. The engine 11 is fixed to the body frame 3 not to be rockable relative to the body frame 3. The engine 11 generates power.

The body frame 3 includes a head tube 4, a right frame 5R, and a left frame 5L. The right frame 5R is shown in Fig. 2. The head tube 4 is disposed at the front of the straddled vehicle 1. The head tube 4 is disposed forward and upward of the engine 11. The left frame 5L extends rearward and downward from the head tube 4. The left frame 5L is disposed leftward of the right frame 5R. The right frame 5R and left frame 5L have the same construction and shape except for being bilaterally symmetric.

The left frame 5L includes a left main frame 6L. The left main frame 6L is connected to the head tube 4. The left main frame 6L extends rearward and downward from the head tube 4. The left main frame 6L is disposed above the engine 11 in a side view of the vehicle. Part of the left main frame 6L may or may not overlap the engine 11 in the side view of the vehicle. In other words, in the side view of the vehicle, the left main frame 6L may have an upper edge thereof extending through a position above the engine 11. In the side view of the vehicle, the left main frame 6L extends to a position rearward of the engine 11.

Reference is made to Fig. 2. The right frame 5R includes a right main frame 6R. The right main frame 6R is disposed rightward of the left main frame 6L. That is, in the side view of the vehicle, the right main frame 6R and left main frame 6L overlap each other. In plan view, the engine 11 is disposed between the right main frame 6R and left main frame 6L. The right main frame 6R has the same construction and shape as the left main frame 6L except for being bilaterally symmetric. For example, the right main frame 6R is disposed above the engine 11 in the side view of the vehicle.

The body frame 3 includes a cross member 9. The cross member 9 extends in the transverse direction Y. The cross member 9 connects the right main frame 6R and left main frame 6L. The cross member 9 is disposed rearward of the head tube 4. The cross member 9 is disposed above the engine 11. In other words, the cross member 9 is disposed upward of the engine 11, and the cross member 9 overlaps the engine 11 in plan view (see Fig. 2).

Reference is made to Fig. 1. The straddled vehicle 1 has a pivot shaft 13. The right main frame 6R and left main frame 6L support the pivot shaft 13. The pivot shaft 13 is disposed rearward of the engine 11. The pivot shaft 13 is disposed in a position lower than the head tube 4. The pivot shaft 13 extends in the transverse direction Y (see Fig. 2).

Reference is made to Fig. 1. The straddled vehicle 1 has a rear arm 14, an axle 15, and a rear wheel 16. The pivot shaft 13 supports the rear arm 14. The rear arm 14 extends rearward from the pivot shaft 13. The rear arm 14 is swingable about the pivot shaft 13. The rear arm 14 supports the axle 15. The axle 15 is disposed rearward of the pivot shaft 13. The axle 15 supports the rear wheel 16. The rear wheel 16 is rotatable about the axle 15. The power generated by the engine 11 is transmitted to the rear wheel 16 to rotate the rear wheel 16.

The straddled vehicle 1 has a steering device 17, a handlebar 18, and a front wheel 19. The steering device 17 is pivotably supported by the head tube 4. The handlebar 18 is connected to an upper part of the steering device 17. The handlebar 18 is operated by the rider of the straddled vehicle 1. The front wheel 19 is supported by a lower part of the steering device 17. The direction of the front wheel 19 changes with pivoting of the steering device 17.

The straddled vehicle 1 has a fuel tank 21. The fuel tank 21 is disposed above the engine 11. In other words, the fuel tank 21 is disposed upward of the engine 11 (see Fig. 1), and the fuel tank 21 overlaps the engine 11 in plan view (see Fig. 3). The fuel tank 21 is disposed above the right main frame 6R and left main frame 6L in the side view of the vehicle (see Fig. 1). The fuel tank 21 overlaps the right main frame 6R and left main frame 6L in plan view (see Fig. 3).

Reference is made to Fig. 1. The straddled vehicle 1 has a seat 22. The seat 22 is disposed rearward of the fuel tank 21. The rider of the straddled vehicle 1 sits astride on the seat 22, and grasps the handlebar 18.

### 2. Construction of body frame

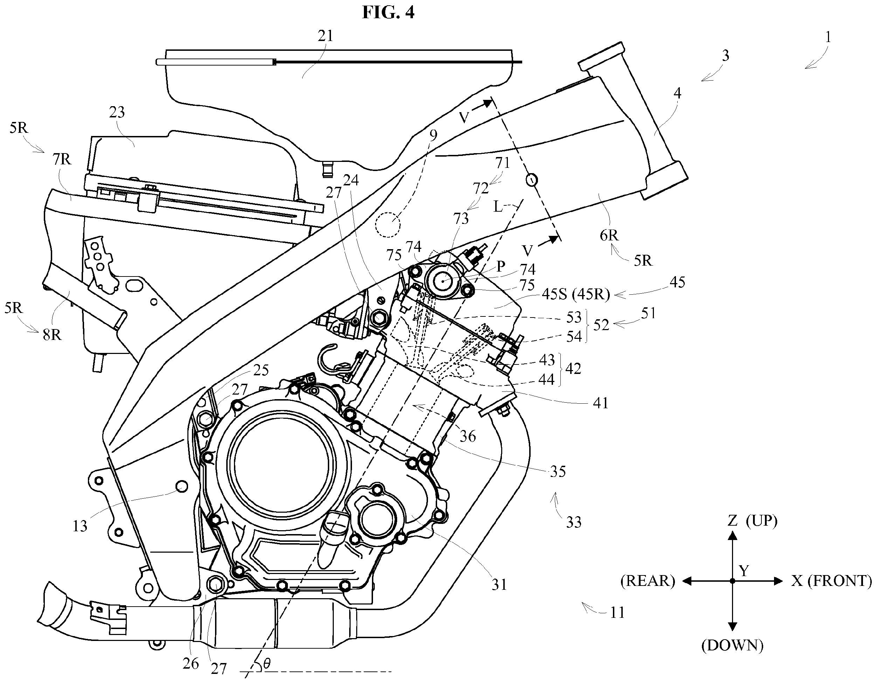

Fig. 4 is a right side view of the portion of the straddled vehicle 1. The right main frame 6R has a relatively large width in the up-down direction Z. In other words, the right main frame 6R has a relatively wide side. The left main frame 6L also is the same.

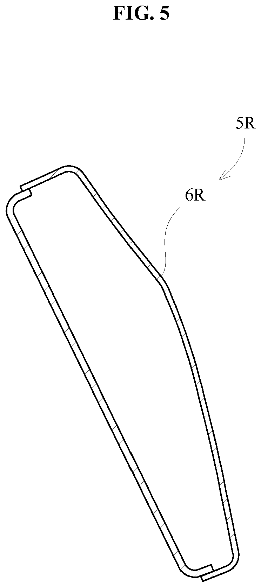

Fig. 5 is a sectional view of the right main frame 6R taken on line V-V of Fig. 4. The section of the right main frame 6R has an outer shape that is oblong and approximately quadrangular or approximately pentagonal. The interior of the right main frame 6R is hollow. Similarly, the section of the left main frame 6L has an outer shape that is oblong and approximately quadrangular or approximately pentagonal. Each of the right main frame 6R and left main frame 6L is what is called a box frame.

Reference is made to Fig. 4. The right frame 5R includes a right seat frame 7R and a right back stay 8R. The right seat frame 7R and right back stay 8R are connected to the right main frame 6R, respectively. The right seat frame 7R and right back stay 8R extend rearward from the right main frame 6R, respectively. A position in which the right seat frame 7R and right main frame 6R are connected is rearward of the cross member 9. The position in which the right seat frame 7R and right main frame 6R are connected is forward of the pivot shaft 13. A position in which the right back stay 8R and right main frame 6R are connected is rearward of the position in which the right seat frame 7R and right main frame 6R are connected. The position in which the right back stay 8R and right main frame 6R are connected is upward of the pivot shaft 13.

Similarly, the left frame 5L includes a left seat frame 7L and a left back stay. The left seat frame 7L is shown in Figs. 2 and 3. The left back stay is not shown. The left seat frame 7L and left back stay have the same constructions and shapes as the right seat frame 7R and right back stay 8R except for being bilaterally symmetric.

Reference is made to Fig. 4. The straddled vehicle 1 has an air cleaner 23. The air cleaner 23 is disposed above the engine 11. In other words, the air cleaner 23 is disposed upward of the engine 11, and overlaps the engine 11 in plan view (see Fig. 3). The air cleaner 23 is disposed upward of the right main frame 6R and left main frame 6L in the side view of the vehicle. More particularly, at least part of the air cleaner 23 is disposed upward of the right main frame 6R and left main frame 6L in the side view of the vehicle. The air cleaner 23 overlaps the right main frame 6R and left main frame 6L in plan view (see Fig. 3). However, this is not limitative. The air cleaner 23 does not need to overlap the right main frame 6R and left main frame 6L in plan view.

Reference is made to Fig. 4. The engine 11 is supported by the body frame 3 through brackets 24, 25 and 26. Each of the brackets 24, 25 and 26 is connected to the body frame 3.

Reference is made to Fig. 2. Two brackets 24 are fixed to the cross member 9. One bracket 25 and one bracket 26 are fixed to the right main frame 6R. Another bracket 25 and another bracket 26 are fixed to the left main frame 6L.

Reference is made to Fig. 4. Each of the brackets 24, 25 and 26 is coupled to the engine 11 by a fastening member 27. The fastening members 27 are bolts, for example. The fastening members 27 are visible in the side view of the vehicle. Consequently, the engine 11 is fixed to the body frame 3.

Thus, the engine 11 is supported only by the right frame 5R, left frame 5L, and cross member 9. More particularly, the engine 11 is supported only by the right main frame 6R, left main frame 6L, and cross member 9.

### 3. Engine construction

Reference is made to Fig. 4. The engine 11 is a water-cooled single-cylinder engine. The engine 11 has a crankcase 31 and a cylinder unit 33.

The crankcase 31 houses a crankshaft not shown. The body frame 3 supports rear parts of the crankcase 31 through the above-noted brackets 25 and 26. The crankcase 31 is disposed below the air cleaner 23. In other words, the crankcase 31 is disposed downward of the air cleaner 23 (see Fig. 4), and overlaps the air cleaner 23 in plan view (see Fig. 3).

The cylinder unit 33 is connected to the crankcase 31. The cylinder unit 33 has a cylinder member 35, a cylinder head 41, and a head cover 45. The cylinder member 35, cylinder head 41, and head cover 45 are connected in this order substantially upward. The crankcase 31 is connected to a lower part of the cylinder member 35. The body frame 3 supports a rear part of the cylinder head 41 through the above-noted brackets 24.

The cylinder member 35 has one cylinder bore 36 centering on a cylinder axis L. The cylinder bore 36 is formed inside the cylinder member 35. In a side view of the vehicle, the cylinder axis L extends forward and upward. The cylinder axis L and a horizontal line form therebetween an angle θ in the side view of the vehicle, which is 45 degrees or larger. The cylinder bore 36 contains a piston (not shown) connected to the crankshaft.

The cylinder head 41 is connected to an upper part of the cylinder member 35. The cylinder head 41 has ports 42 which communicate with the cylinder bore 36. The ports 42 are formed inside the cylinder head 41. The ports 42 include an inlet port 43 and an exhaust port 44. The inlet port 43 is disposed rearward of the exhaust port 44 in the side view of the vehicle. The inlet port 43 is disposed rearward of the cylinder axis L in the side view of the vehicle. The inlet port 43 is connected to the air cleaner 23.

The head cover 45 is connected to an upper part of the cylinder head 41. The head cover 45 has a peripheral wall portion 45S extending circumferentially about the cylinder axis L. The peripheral wall portion 45S includes a right wall 45R. The right wall 45R is disposed rightward of the cylinder axis L.

The cylinder unit 33 has a valve operating device 51. The valve operating device 51 opens and closes the ports 42. The valve operating device 51 includes valves 52 for opening and closing the ports 42. The valves 52 are supported by the cylinder head 41. The valves 52 are movable up and down relative to the cylinder head 41.

The valves 52 include two inlet valves 53 and two exhaust valves 54. The two inlet valves 53 are arranged in a line in the transverse direction Y. The two exhaust valves 54 are arranged in a line in the transverse direction Y. The inlet valves 53 open and close the inlet port 43. The exhaust valves 54 open and close the exhaust port 44. The inlet valves 53 are arranged rearward of the exhaust valves 54 in the side view of the vehicle. The inlet valves 53 are arranged rearward of the cylinder axis L in the side view of the vehicle.

The cylinder unit 33 has a variable valve mechanism 71. The variable valve mechanism 71 changes conditions for the valve operating device 51 to open and close the ports 42. The opening and closing conditions include at least either one of opening and closing time of the valves 52 and lift amount of the valves 52, for example.

The variable valve mechanism 71 includes an actuator 72. The actuator 72 changes the opening and closing conditions of the valve operating device 51. Specifically, the actuator 72 changes the opening and closing conditions of the inlet valves 53.

The actuator 72 has an actuator body 73. The actuator body 73 is disposed outside the head cover 45. Specifically, the actuator body 73 is disposed on a right side of the head cover 45. The actuator body 73 is attached to the head cover 45. Specifically, the actuator body 73 is attached to the peripheral wall portion 45S (more specifically, the right wall 45R) of the head cover 45.

The actuator body 73 has a substantially tubular shape. The actuator body 73 is located in a position overlapping the head cover 45 in the side view of the vehicle. More particularly, an entirety of the actuator body 73 overlaps the head cover 45 in the side view of the vehicle. The actuator body 73 is disposed to have the center P thereof located rearward of the cylinder axis L in the side view of the vehicle. More particularly, the actuator body 73 is disposed so that the entirety of the actuator body 73 be located rearward of the cylinder axis L in the side view of the vehicle.

Further, the actuator body 73 is disposed to have the center P thereof located upward of a lower end of the right wall 45R in the side view of the vehicle. The actuator body 73 is disposed to have the center P thereof located above mating surfaces of the cylinder head 41 and head cover 45 in the side view of the vehicle. More particularly, in the side view of the vehicle, the actuator body 73 is disposed so that the entirety of the actuator body 73 be located upward of the mating surfaces of the cylinder head 41 and head cover 45. Incidentally, according to Fig. 1 of Japanese Unexamined Patent Publication No. 2012-137048 cited hereinbefore as a conventional example, the actuator appears to be disposed so that the center of the actuator overlap the mating surfaces of the cylinder head and head cover in a side view of the vehicle.

The actuator body 73 overlaps the right main frame 6R in plan view (see Figs. 2 and 3).

The actuator body 73 generates power for changing the opening and closing conditions of the inlet valves 53. Though not shown in the drawings, the actuator body 73 has, for example, a drive mechanism for generating the power, and a housing for containing the drive mechanism. More particularly, the drive mechanism advances and withdraws a rod 76 and a connecting pin 77 described hereinafter. The drive mechanism is an electromagnetic solenoid, for example.

The actuator 72 has a mounting element 74. The mounting element 74 is a member for attaching the actuator body 73. The mounting element 74 is disposed on an outer peripheral surface of the right wall 45R. The mounting element 74 is connected to the actuator body 73. The mounting element 74 protrudes from the outer peripheral surface of the actuator body 73. The mounting element 74 has a plate shape. The mounting element 74 may be integrated with or may be formed separately from the housing of the actuator body 73.

The mounting element 74 is fixed to the head cover 45 by fastening members 75. The fastening members 75 are bolts, for example. The fastening members 75 couple the mounting element 74 to the right wall 45R of the head cover 45. Consequently, the actuator body 73 is attached to the head cover 45.

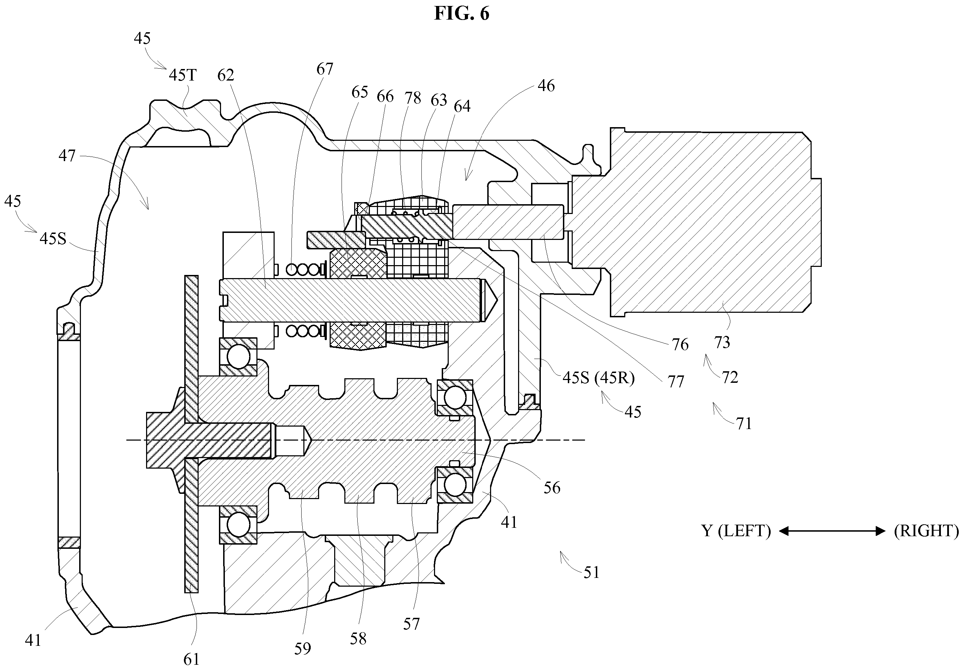

Fig. 6 is a view in vertical section of the cylinder head 41 and head cover 45. The head cover 45 and cylinder head 41 form a valve operating chamber 46 and a cam chain chamber 47 therebetween. The valve operating chamber 46 and cam chain chamber 47 are arranged in a line in the transverse direction Y. The cam chain chamber 47 is disposed leftward of the valve operating chamber 46.

The actuator body 73 and mounting element 74 are arranged outside the valve operating chamber 46. The actuator body 73 and mounting element 74 are arranged opposite the cam chain chamber 47 across the valve operating chamber 46. Specifically, the actuator body 73 and mounting element 74 are arranged rightward of the valve operating chamber 46.

The valve operating device 51 is disposed in the valve operating chamber 46. The valve operating device 51 is the SOHC (Single Overhead Camshaft) type. The valve operating device 51 has a cam shaft 56, a plurality of inlet cams 57 and 58, and one exhaust cam 59. The cam shaft 56 is rotatably supported by the cylinder head 41. The inlet cams 57 and 58 and exhaust cam 59 rotate with the cam shaft 56. The inlet cams 57 and 58 have cam profiles different from each other. The inlet cams 57 and 58 have shapes different from each other. When distinguishing the inlet cams 57 and 58, they will be called "first inlet cam 57" and "second inlet cam 58" as appropriate.

The cam shaft 56 has a sprocket 61 mounted at one end thereof. The sprocket 61 is disposed in the cam chain chamber 47. A cam chain, not shown, is wound around the sprocket 61. The cam chain transmits rotative power of the crankshaft to the cam shaft 56.

The valve operating device 51 has an inlet rocker shaft 62, a first inlet rocker arm 63, and a second inlet rocker arm 65. The inlet rocker shaft 62 is supported by the cylinder head 41. The first inlet rocker arm 63 and second inlet rocker arm 65 are supported by the inlet rocker shaft 62. The first inlet rocker arm 63 and second inlet rocker arm 65 are rockable about the inlet rocker shaft 62, respectively.

The first inlet rocker arm 63 is contactable with the first inlet cam 57. The first inlet rocker arm 63 is rockable in response to rotation of the first inlet cam 57. The second inlet rocker arm 65 is contactable with the second inlet cam 58. The second inlet rocker arm 65 is rockable in response to rotation of the second inlet cam 58.

The valve operating device 51 has a biasing member 67. The biasing member 67 applies force to the second inlet rocker arm 65 to press the second inlet rocker arm 65 on the second inlet cam 58. The biasing member 67 is a coil spring, for example. For example, one end of the coil spring is held by the cylinder head 41 or other element, and the other end of the coil spring contacts the second inlet rocker arm 65 or other element. The coil spring is mounted on the inlet rocker shaft 62, for example.

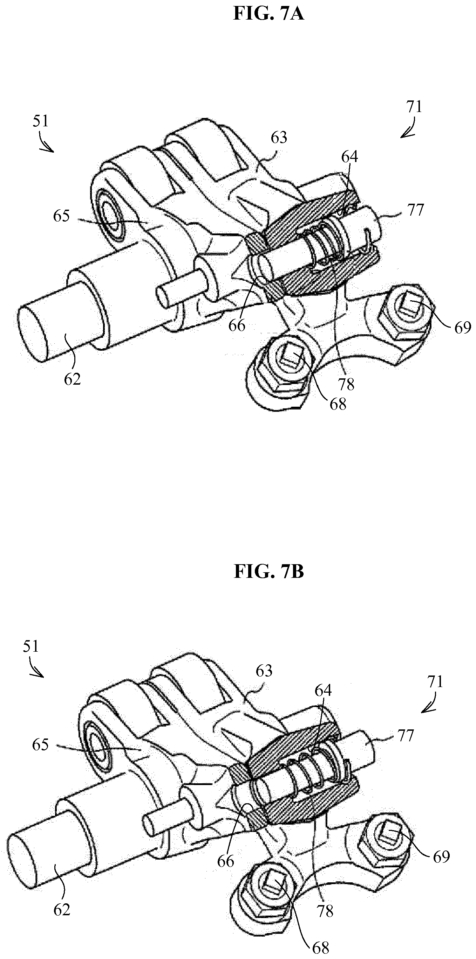

Figs. 7A and 7B are perspective views of the first inlet rocker arm 63 and second inlet rocker arm 65. The valve operating device 51 has adjuster screws 68 and 69. The adjuster screws 68 and 69 are supported by the first inlet rocker arm 63. The adjuster screw 68 contacts one of the inlet valves 53 (specifically, a stem end of the inlet valve 53). The adjuster screw 69 contacts the other inlet valve 53. The adjuster screws 68 and 69 drive (press) the inlet valves 53 in response to the rocking of the first inlet rocker arm 63, respectively.

Though not shown, the valve operating device 51 has an exhaust rocker shaft, an exhaust rocker arm, and two exhaust adjuster screws. The exhaust rocker arm and exhaust adjuster screws rock together in response to rotation of the exhaust cam 59. The exhaust adjuster screws drive the exhaust valves 54, respectively.

Reference is made to Figs. 6, 7A and 7B. The first inlet rocker arm 63 has a first connecting bore 64. The first connecting bore 64 is formed inside the first inlet rocker arm 63. The second inlet rocker arm 65 has a second connecting bore 66. The second connecting bore 66 is formed inside the second inlet rocker arm 65. The first connecting bore 64 and second connecting bore 66 extend in the transverse direction Y, respectively. The first connecting bore 64 and second connecting bore 66 are in coaxial arrangement. Figs. 7A and 7B show part of the first inlet rocker arm 63 and part of the second inlet rocker arm 65 in section, and depict the first connecting bore 64 and second connecting bore 66.

The variable valve mechanism 71 has the connecting pin 77. The connecting pin 77 is disposed in the valve operating chamber 46. More particularly, the connecting pin 77 is mounted in the first connecting bore 64. The connecting pin 77 is movable to a connecting position and a release position.

Fig. 7A shows the connecting pin 77 in the connecting position. When the connecting pin 77 is in the connecting position, one end of the connecting pin 77 is inserted in the second connecting bore 66, That is, the connecting pin 77 is located to extend through both the first connecting bore 64 and second connecting bore 66.

When the connecting pin 77 is in the connecting position, the valve operating device 51 operates as follows. The connecting pin 77 connects the first inlet rocker arm 63 and second inlet rocker arm 65 together. The first inlet rocker arm 63, adjuster screws 68 and 69, and second inlet rocker arm 65 rock together in response to rotation of the second inlet cam 58. As the adjuster screws 68 and 69 make rocking movement, the adjuster screws 68 and 69 press the inlet valves 53. Consequently, the inlet valves 53 open and close the inlet port 43.

The cam profiles of the first inlet cam 57 and second inlet cam 58 are set, respectively, such that, when the first inlet rocker arm 63 and second inlet rocker arm 65 are connected, the first inlet rocker arm 63 and second inlet rocker arm 65 rock in response to the second inlet cam 58,

Fig. 7B shows the connecting pin 77 in the release position. When the connecting pin 77 is in the release position, the one end of the connecting pin 77 is not inserted in the second connecting bore 66. That is, the connecting pin 77 is not located to extend through both the first connecting bore 64 and second connecting bore 66.

When the connecting pin 77 is in the release position, the valve operating device 51 operates as follows. The first inlet rocker arm 63 and second inlet rocker arm 65 are not connected to each other. In other words, the connecting pin 77 cancels the connection between the first inlet rocker arm 63 and second inlet rocker arm 65. The first inlet rocker arm 63 and adjuster screws 68 and 69 rock together in response to rotation of the first inlet cam 57. As the adjuster screws 68 and 69 make rocking movement, the adjuster screws 68 and 69 press the inlet valves 53. Consequently, the inlet valves 53 open and close the inlet port 43. The inlet valves 53 open and close the inlet port 43 with opening and closing conditions different from the opening and closing conditions of the time when the connecting pin 77 is in the connecting position.

The variable valve mechanism 71 has a pin biasing member 78. The pin biasing member 78 applies force to the connecting pin 77 to move in a direction from the connecting position toward the release position. The pin biasing member 78 is disposed in the first connecting bore 64. The pin biasing member 78 is a coil spring, for example. For example, one end of the coil spring is held by the first inlet rocker arm 63, and the other end of the coil spring contacts the connecting pin 77. The coil spring is mounted on the connecting pin 77, for example.

Reference is made to Fig. 6. The actuator 72 includes the rod 76. The rod 76 is connected to the actuator body 73. That is, the rod 76 has one end thereof connected to the actuator body 73. The one end of the rod 76 is located outside the head cover 45 (valve operating chamber 46).

The rod 76 is disposed to lie both inside and outside of the head cover 45. The rod 76 is disposed to penetrate the peripheral wall portion 45S (specifically, the right wall 45R) of the head cover 45. The rod 76 contacts the other end of the connecting pin 77. That is, rod 76 has the other end in contact with the connecting pin 77. The other end of the rod 76 is located in the valve operating chamber 46.

The actuator body 73 drives the rod 76. Specifically, the actuator body 73 linearly advances and withdraws the rod 76. The actuator body 73 has a drive axis (imaginary line) for advancing and withdrawing the rod 76, which axis extends parallel to the transverse direction Y, for example. The drive axis of the actuator body 73 passes through the center P of the actuator body 73 in the side view of the vehicle, for example.

With the actuator body 73 driving the rod 76, the connecting pin 77 moves to the connecting position and the release position.

### 4. Engine layout

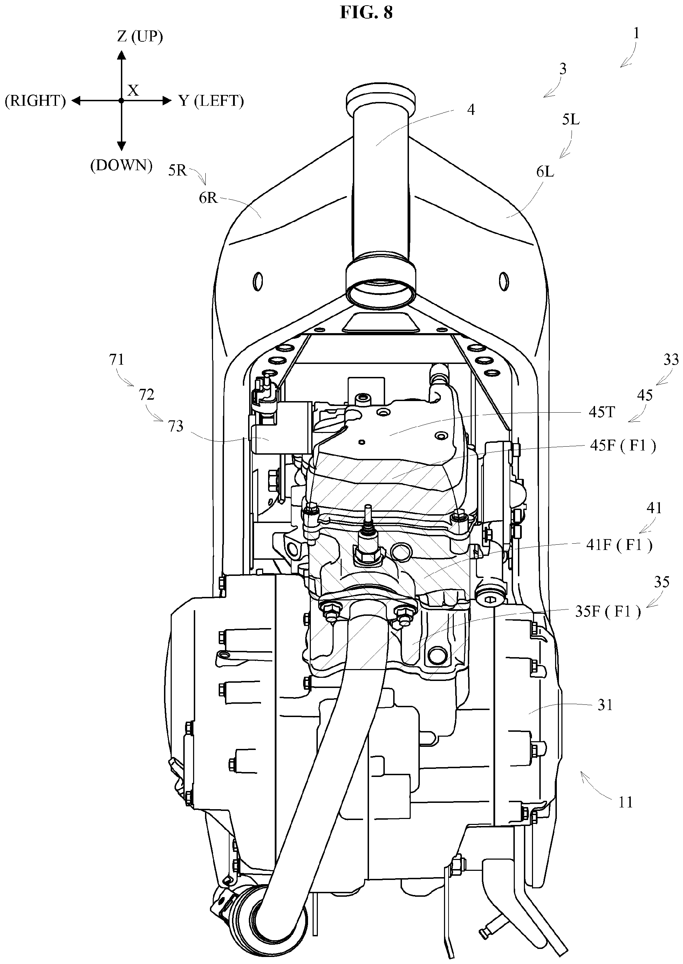

Fig. 8 is a front view of part of the straddled vehicle 1. The cylinder member 35 has a front wall 35F. The cylinder head 41 has a front wall 41F. The head cover 45 has a front wall 45F. The front wall 45F of the head cover 45 is part of the peripheral wall portion 45S of the head cover 45. The front wall 45F is located forward of the cylinder axis L. Similarly, of peripheral wall portions of the cylinder member 35 and cylinder head 41, the front walls 35F and 41F are wall members located forward of the cylinder axis L, respectively. For expediency, Fig. 8 schematically shows ranges of the front wall 35F of the cylinder member 35, the front wall 41F of the cylinder head 41, and the front wall 45F of the head cover 45.

The body frame 3 is not located forward of each of the front walls 35F, 41F and 45F of the cylinder member 35, cylinder head 41, and head cover 45. The body frame 3 does not overlap each of the front walls 35F, 41F and 45F in the front view of the vehicle. In other words, a portion of the body frame 3 forward of each of the front walls 35F, 41F and 45F does not overlap each of the front walls 35F, 41F and 45F in the front view of the vehicle. A portion of the body frame 3 rearward of each of the front walls 35F, 41F and 45F may overlap each of the front walls 35F, 41F and 45F in the front view of the vehicle.

The front wall 35F, front wall 41F, and front wall 45F will collectively be called hereinafter the "first front wall F1" as appropriate. The body frame 3 is located in a position not overlapping the first front wall F1 in the front view of the vehicle.

Further, the body frame 3 is not located forward of a top wall 45T of the head cover 45, either. The body frame 3 does not overlap the top wall 45T in the front view of the vehicle, either. The body frame 3 is located in a position not overlapping the first front wall F1 or the top wall 45T in the front view of the vehicle. Here, the top wall 45T is a wall member which intersects the cylinder axis L, and is not an element of the peripheral wall portion 45S. The top wall 45T of the head cover 45 corresponds to an upper surface of the engine 11.

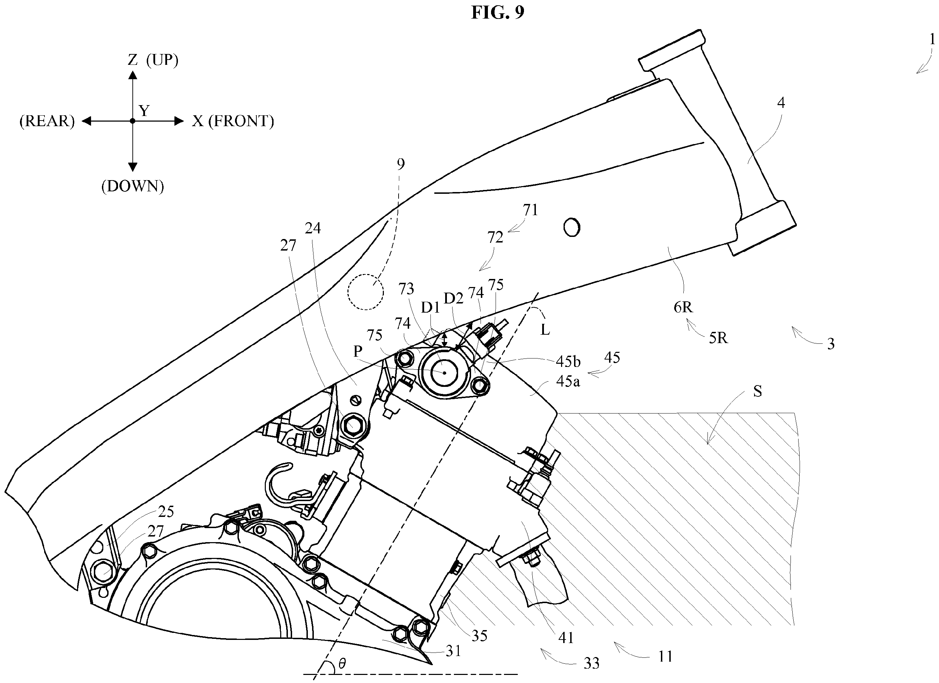

Fig. 9 is a right side view of a portion of the straddled vehicle 1. The body frame 3 is not located forward of the first front wall F1. Fig. 9 schematically shows space S forward of the first front wall F1. The space S is a space which overlaps only the entirety of the first front wall F1 in the front view of the vehicle. The body frame 3 is not located in this space S.

The cylinder unit 33 is inclined so that the actuator body 73 overlap neither the right main frame 6R nor the left main frame 6L in the side view of the vehicle. In other words, the cylinder unit 33 is installed at such a forward inclination angle that the actuator body 73 does not overlap the right main frame 6R or the left main frame 6L in the side view of the vehicle. Here, the forward inclination angle is synonymous with angle θ which the cylinder axis L forms with the horizontal line in the side view of the vehicle. Angle θ will hereinafter be referred to as "forward inclination angle θ" as appropriate. The forward inclination angle θ is 45 degrees or larger.

As a result, the actuator body 73 is not located between the right main frame 6R and left main frame 6L. Specifically, the actuator body 73 is located below the right main frame 6R in the side view of the vehicle.

In the side view of the vehicle, the actuator body 73 is spaced from the right main frame 6R in the up-down direction Z. Fig. 9 shows an interval D1 in the up-down direction Z between the actuator body 73 and right main frame 6R.

In the side view of the vehicle, the actuator body 73 is spaced from the right main frame 6R in a direction along the cylinder axis L, Fig. 9 shows an interval D2 in the direction along the cylinder axis L between the actuator body 73 and right main frame 6R.

A portion of the head cover 45 located in a position forward of the cylinder axis L in the side view of the vehicle is called the "front portion 45a of the head cover 45". A portion of the head cover 45 located in a position rearward of the cylinder axis L in the side view of the vehicle is called the "rear portion 45b of the head cover 45". In the side view of the vehicle, the front portion 45a of the head cover 45 does not overlap the right main frame 6R. In the side view of the vehicle, one part of the rear portion 45b of the head cover 45 overlaps the right main frame 6R, and the other part of the rear portion 45b of the head cover 45 does not overlap the right main frame 6R.

### 5. Advantageous effects

According to this embodiment, the actuator body 73 is attached to the head cover 45. In order to attach the actuator body 73 to the head cover 45, the height of the head cover 45 (that is, the length of the head cover 45 in the up-down direction Z) is increased. The height of the cylinder head 41 (that is, the length of the cylinder head 41 in the up-down direction Z) can be reduced by an amount corresponding to the increase in the height of the head cover 45. By reducing the height of the cylinder head 41, the fore and aft size of the cylinder head 41 can be reduced. Here, the fore and aft size of the cylinder head 41 is an interval between of the front wall 41F and rear wall of the cylinder head 41. By reducing the fore and aft size of the cylinder head 41, the cylinder head 41 can be made small. By making the cylinder head 41 small, the entire engine 11 can be made small. Thus, even though the engine 11 has the actuator 72, the engine 11 can be reduced in size by attaching the actuator body 73 to the head cover 45.

Since the actuator body 73 is attached to the head cover 45, the actuator body 73 is located in a high position. Further, the cylinder axis L extends upward and forward at angle θ of 45 degrees or larger to the horizontal line in a side view of the vehicle, and the center P of the actuator body 73 is located rearward of the cylinder axis L in the side view of the vehicle. The actuator body 73 is therefore located in a still higher position. On the other hand, the body frame 3 is not located forward of the first front wall F1, and the body frame 3 does not overlap the first front wall F1 in the front view of the vehicle. Since the body frame 3 has such a frame structure, the right main frame 6R and left main frame 6L can easily be arranged in low positions in order to secure strength of the body frame 3.

Thus, considering the layout of the actuator body 73 and cylinder axis L and the construction of the body frame 3, the actuator body 73, at a glance, appears to overlap easily at least one of the right main frame 6R and left main frame 6L in the side view of the vehicle. In this embodiment, the actuator body 73 seems easily to overlap particularly the right main frame 6R in the side view of the vehicle.

However, this embodiment, with the following construction, can further avoid the actuator body 73 overlapping at least one of the right main frame 6R and left main frame 6L in the side view of the vehicle. That is, the cylinder unit 33 is inclined so that the actuator body 73 overlap neither the right main frame 6R nor the left main frame 6L in the side view of the vehicle. This construction is hereinafter called "construction A" as appropriate to distinguish it from the other constructions.

According to construction A, the actuator body 73 is not disposed in the space between the right main frame 6R and left main frame 6L (that is, a space tending to trap heat). The actuator body 73 can therefore radiate heat conveniently. That is, the actuator body 73 can be cooled well.

Construction A makes effective use of the construction of the body frame 3. That is, because of the construction of the body frame 3, the body frame 3 does not exist in the space S forward of the first front wall F1. Therefore, even though the cylinder unit 33 is inclined forward, there is no possibility of the cylinder unit 33 interfering with the body frame 3. The forward inclination angle θ of the cylinder unit 33 can therefore easily be selected, changed or adjusted. The cylinder unit 33 can easily be installed in such a position that the actuator body 73 overlaps neither the right main frame 6R nor the left main frame 6L in the side view of the vehicle.

The body frame 3 is often employed for straddled vehicles of the sport type and the street type. For the straddled vehicles of the sport type and the street type, cooling of the engine 11 is especially important. Since the actuator body 73 can be cooled well according to construction A, the actuator 72 can conveniently be prevented from causing an adverse effect on the cooling of the engine 11.

Construction A makes effective use of the layout of the actuator body 73. As noted above, since the actuator body 73 is attached to the head cover 45, the actuator body 73 is located in a high position. This layout of the actuator body 73 is disadvantageous in being easy to overlap at least one of the right main frame 6R and left main frame 6L in the side view of the vehicle. However, just because the actuator body 73 is located in a high position, the position of the actuator body 73 can be shifted forward all the more effectively by change of the forward inclination angle θ of the cylinder unit 33. Thus, since effective use is made of the actuator body 73 being attached to the head cover 45, the position of the actuator body 73 can be selected or changed efficiently by the posture of the cylinder unit 33. Consequently, by adjusting the forward inclination angle θ of the cylinder unit 33, the actuator body 73 can easily be installed in a position not overlapping the right main frame 6R or left main frame 6L in the side view of the vehicle.

Further, construction A makes effective use of the layout of the cylinder axis L and actuator body 73. As described hereinbefore, the cylinder axis L extends upward and forward at angle θ of 45 degrees or larger to the horizontal line in the side view of the vehicle, and the center P of the actuator body 73 is located rearward of the cylinder axis L in the side view of the vehicle. According to this "layout of the cylinder axis L and actuator body 73", the actuator body 73 is located in a still higher position. Consequently, the "layout of the cylinder axis L and actuator body 73" is disadvantageous in being still easier to overlap at least one of the right main frame 6R and left main frame 6L in the side view of the vehicle. However, just because of the "layout of the cylinder axis L and actuator body 73", the position of the actuator body 73 can be changed to a large extent forward only by slightly changing the forward inclination angle θ of the cylinder unit 33. Specifically, when the forward inclination angle θ of the cylinder unit 33 is reduced, the actuator body 73 moves forward and downward. Here, an amount the actuator body 73 shifts forward is larger than an amount the actuator body 73 shifts downward. Thus, since effective use is made of the "layout of the cylinder axis L and actuator body 73", the position of the actuator body 73 can be selected or changed more effectively by the posture of the cylinder unit 33. Consequently, by adjusting the forward inclination angle θ of the cylinder unit 33, the actuator body 73 can be installed with increased ease in a position not overlapping the right main frame 6R or left main frame 6L in the side view of the vehicle.

When the forward inclination angle θ of the cylinder unit 33 is reduced, the position of the center of gravity of the engine 11 also shifts downward. However, an amount the position of the center of gravity of the engine 11 shifts downward is relatively limited. Specifically, when the forward inclination angle θ of the cylinder unit 33 becomes smaller, the amount the position of the center of gravity of the engine 11 shifts downward is smaller than an amount the position of the center of gravity of the engine 11 shifts forward. Therefore, even when the forward inclination angle θ of the cylinder unit 33 is adjusted, it can be inhibited conveniently from affecting kinematic performance of the straddled vehicle 1 of the street type.

As described above, each of the construction of the body frame 3 and the layout of the actuator body 73 and cylinder axis L has a disadvantageous side of being still easier for the actuator body 73 to overlap at least one of the right main frame 6R and left main frame 6L in the side view of the vehicle. Construction A is obtained from an elaboration of the layout of the engine 11 made by taking advantage of the construction of the body frame 3 and the layout of the actuator body 73 and cylinder axis L. Construction A enables the actuator body 73 to be easily placed in a position spaced away from between the right main frame 6R and left main frames 6L, thereby to cool the actuator body 73 conveniently. Moreover, even though the straddled vehicle 1 has construction A, no substantial influence is exerted on the ride performance of the straddled vehicle 1. That is, according to this embodiment, the performance of the straddled vehicle 1 as the street type can be maintained while promoting the cooling of the actuator 72.

The actuator body 73 is disposed in a position overlapping the head cover 45 in the side view of the vehicle. Since, as a result, the actuator body 73 is located in a high position, the actuator body 73, at a glance, appears all the more easily to overlap at least one of the right main frame 6R and left main frame 6L in the side view of the vehicle. However, just because the actuator body 73 is disposed in the position overlapping the head cover 45 in the side view of the vehicle, the position of the actuator body 73 can be shifted forward effectively by change of the forward inclination angle θ of the cylinder unit 33. Thus, since effective use is made of the actuator body 73 being disposed in the position overlapping the head cover 45 in the side view of the vehicle, the position of the actuator body 73 can be selected or changed efficiently by the posture of the cylinder unit 33. Consequently, by adjusting the forward inclination angle θ of the cylinder unit 33, the actuator body 73 can still more easily be installed in a position not overlapping the right main frame 6R or left main frame 6L in the side view of the vehicle.

The body frame 3 is not disposed not only forward of the first front wall F1 but forward of the top wall 45T of the head cover 45. The body frame 3 does not overlap not only the first front wall F1 but the top wall 45T in the front view of the vehicle. The forward inclination angle θ of the cylinder unit 33 can therefore still more easily be selected, changed, or adjusted.

In the side view of the vehicle, the actuator body 73 is spaced from the right main frame 6R in the up-down direction Z. The actuator body 73 is therefore movable in the up-down direction Z without interfering with the right main frame 6R and left main frame 6L. Consequently, at a time of maintenance, for example, the actuator 72 can easily be detached from and attached to the head cover 45. Thus, the maintainability of the actuator 72 can be improved. Further, at a time of maintenance, for example, the head cover 45 in the state of the actuator 72 attached to the head cover 45 can easily be detached from and attached to the cylinder head 41. Thus, the maintainability of the actuator 72 and head cover 45 as a whole can be improved.

In the side view of the vehicle, the actuator body 73 is spaced from the right main frame 6R in a direction along the cylinder axis L. The actuator body 73 is therefore movable in the direction along the cylinder axis L without interfering with the right main frame 6R and left main frame 6L. Consequently, at a time of maintenance, for example, the actuator 72 can easily be detached from and attached to the head cover 45. Thus, the maintainability of the actuator 72 can be further improved. Further, at a time of maintenance, for example, the head cover 45 in the state of the actuator 72 attached to the head cover 45 can easily be detached from and attached to the cylinder head 41. Thus, the maintainability of the actuator 72 and head cover 45 as a whole can be improved.

In plan view, the actuator body 73 overlaps the right main frame 6R. Consequently, an interval in the transverse direction Y between the right main frame 6R and left main frame 6L can be made small. Further, the right main frame 6R, left main frame 6L, and engine 11 can be arranged compactly.

The cam chain chamber 47 is disposed on one side (specifically, leftward) in the transverse direction Y of the valve operating chamber 46. The actuator body 73 is disposed on the other side (specifically, rightward) in the transverse direction Y of the valve operating chamber 46. Since the actuator body 73 is disposed in a position spaced from the cam chain chamber 47, there is no possibility that the actuator body 73 interferes with the members (e.g. sprocket 61, cam chain, and so on) provided in the cam chain chamber 47. The actuator body 73 can therefore be installed conveniently.

The engine 11 is supported only by the right frame 5R, left frame 5L, and cross member 9. With such a support structure of the engine 11, the right main frame 6R and left main frame 6L are often arranged in low positions, respectively. The actuator body 73 therefore tends all the more easily to overlap at least one of the right main frame 6R and left main frame 6L in the side view of the vehicle. However, even when the straddled vehicle 1 employs such a support structure of the engine 11, it is conveniently avoidable according to this embodiment that the actuator body 73 overlaps at least either the right main frame 6R or the left main frame 6L in the side view of the vehicle. Thus, even when it is easy to produce a problem that the actuator body 73 overlaps at least one of the right main frame 6R and left main frame 6L in the side view of the vehicle, this embodiment can solve this problem. The more easily the above problem is produced, the higher usefulness this embodiment demonstrates.

Further, the engine 11 is supported only by the right main frame 6R, left main frame 6L, and cross member 9. With such a support structure of the engine 11, the right main frame 6R and left main frame 6L tend to be arranged in still lower positions, respectively. The actuator body 73 therefore tends all the more easily to overlap at least one of the right main frame 6R and left main frame 6L in the side view of the vehicle. However, even when the straddled vehicle 1 employs such a support structure of the engine 11, it is conveniently avoidable according to this embodiment that the actuator body 73 overlaps at least either the right main frame 6R or the left main frame 6L in the side view of the vehicle.

The straddled vehicle 1 has the fastening members 27 fastened to the engine 11 in order for the body frame 3 to support the engine 11, the fastening members 27 being visible in the side view of the vehicle. Consequently, at a time of maintenance, for example, the engine 11 can easily be detached from and attached to the body frame 3. Thus, the maintainability of the engine 11 can be improved.

The outer shape of a section of each of the right main frame 6R and left main frame 6L is oblong and approximately quadrangular or approximately pentagonal. Since the right main frame 6R and left main frame 6L have such a construction, the actuator body 73 all the more easily overlaps at least one of the right main frame 6R and left main frame 6L in the side view of the vehicle. However, even when the right main frame 6R and left main frame 6L have such a construction, it is conveniently avoidable according to this embodiment that the actuator body 73 overlaps at least either the right main frame 6R or the left main frame 6L in the side view of the vehicle.

In the side view of the vehicle, the front portion 45a of the head cover 45 does not overlap the right main frame 6R, but the rear portion 45b of the head cover 45 overlaps the right main frame 6R. Thus, when the right main frame 6R is located in a position close to the engine 11, the actuator body 73 all the more easily overlaps at least one of the right main frame 6R and left main frame 6L in the side view of the vehicle. However, even in such a case, it is conveniently avoidable according to this embodiment that the actuator body 73 overlaps at least either the right main frame 6R or the left main frame 6L in the side view of the vehicle.

The inlet valves 53 are arranged rearward of the cylinder axis L in the side view of the vehicle, and the actuator 72 changes the opening and closing conditions of the inlet valves 53. In such a case, the actuator body 73 is often disposed such that that the center P of the actuator body 73 is located rearward of the cylinder axis L in the side view of the vehicle. Construction A is therefore conveniently applicable.

Since the actuator 72 has the mounting element 74, the actuator body 73 can conveniently be detached from and attached to the head cover 45 at a time of maintenance, for example. Consequently, even though the actuator body 73 is disposed in a high position, it can conveniently prevent impairment of the maintainability of the actuator 72.

Since the actuator body 73 includes an electromagnetic solenoid, it can change the opening and closing conditions of the valve operating device 51 (inlet valves 53) conveniently.

The engine 11 is a single-cylinder engine. In other words, the number of cylinder bores 36 of the cylinder member 35 is one. Thus, the engine 11 can be further reduced in size.

Since the air cleaner 23 is disposed above the engine 11, streams of air do not easily flow through the space around the engine 11. Even in such a case, since the actuator body 73 can be disposed in an appropriate position according to this embodiment, the actuator 72 can be cooled conveniently.

Since the fuel tank 21 is disposed above the engine 11 in the side view of the vehicle, streams of air do not easily flow through the space around the engine 11. Even in such a case, since the actuator body 73 can be disposed in an appropriate position according to this embodiment, the actuator 72 can be cooled conveniently.

The preferred embodiment may be modified as follows:
(1) In the foregoing embodiment, the right frame 5R has the right main frame 6R, right seat frame 7R, and right back stay 8R. Alternatively, the construction of the right frame 5R may be changed as appropriate. The construction of the left frame 5L may be changed similarly.

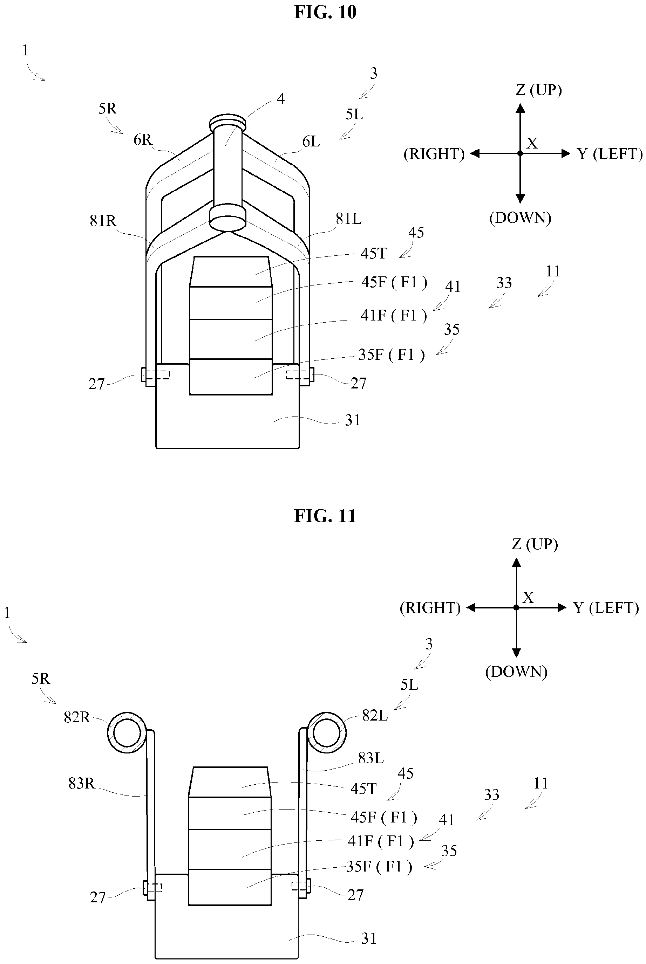

Fig. 10 is a front view of a portion of a straddled vehicle 1 according to a modified embodiment. Components identical to those of the embodiment are shown with the same signs, and will not particularly be described.

A right frame 5R includes a right main frame 6R and a right down frame 81R. The right main frame 6R and right down frame 81R are connected to a head tube 4, respectively. The right main frame 6R extends rearward and downward from the head tube 4. The right down frame 81R is disposed below the right main frame 6R, and extends rearward and downward from the head tube 4. The right main frame 6R and right down frame 81R support the engine 11, respectively. A left frame 5L is disposed leftward of the right frame 5R. The left frame 5L has the same construction and shape as the right frame 5R except for being bilaterally symmetric. That is, the left frame 5L includes a left main frame 6L and a left down frame 81L. The left main frame 6L corresponds to the right main frame 6R, and the left down frame 81L corresponds to the right down frame 81R.

The body frame 3 is not disposed forward of the first front wall F1. The body frame 3 does not overlap the first front wall F1 in a front view of the vehicle. The body frame 3 does not exist in the space S forward of the first front wall F1. The body frame 3 specifically comprises the head tube 4, right frame 5R (right main frame 6R and right down frame 81R), and left frame 5L (left main frame 6L and left down frame 81L), which are arranged in positions not overlapping the first front wall F1 in the front view of the vehicle, respectively. With this modified embodiment also, therefore, the forward inclination angle θ of the cylinder unit 33 can easily be selected, changed, or adjusted.

Fig. 11 is a front view of a portion of a straddled vehicle 1 according to another modified embodiment. Components identical to those of the embodiment are shown with the same signs, and will not particularly be described. Fig. 11 shows a right main frame 82R and a left main frame 82L in section.

A right frame 5R includes a right main frame 82R. The right main frame 82R has an outer shape approximately circular in section. The right main frame 82R has a hollow interior. The right main frame 82R is what is called a pipe frame. The right main frame 82R is disposed in the same way as the right main frame 6R described in the embodiment. That is, though not depicted, the right main frame 82R extends rearward and downward from the head tube 4. The right main frame 82R is located above the engine 11 in the side view of the vehicle.

The right frame 5R further includes a right down frame 83R. The right down frame 83R is connected to the right main frame 82R. The right down frame 83R extends downward from the right main frame 82R. The right down frame 83R supports the engine 11.

A left frame 5L is disposed leftward of the right frame 5R. The left frame 5L has the same construction and shape as the right frame 5R except for being bilaterally symmetric. That is, the left frame 5L includes a left main frame 82L and a left down frame 83L. The left main frame 82L corresponds to the right main frame 82R, and the left down frame 83L corresponds to the right down frame 83R.

The body frame 3 is not disposed forward of the first front wall F1. The body frame 3 does not overlap the first front wall F1 in a front view of the vehicle. The body frame 3 does not exist in the space S forward of the first front wall F1. The body frame 3 specifically comprises the head tube 4, right frame 5R (right main frame 82R and right down frame 83R), and left frame 5L (left main frame 82L and left down frame 83L), which are arranged in positions not overlapping the first front wall F1 in the front view of the vehicle, respectively. With this modified embodiment also, therefore, the forward inclination angle θ of the cylinder unit 33 can easily be selected, changed, or adjusted.

In each of the modified embodiments shown in Figs. 10 and 11, the right down frame 81R/83R may or may not overlap the engine 11 in the side view of the vehicle. The right down frame 81R/83R may be disposed forward of the engine 11 in the side view of the vehicle. In this case also, the right down frame 81R/83R may or may not overlap the engine 11 in the side view of the vehicle. Further, the right down frame 81R/83R may have an outer shape which is oblong and approximately polygonal or approximately circular in section. The right down frame 81R/83R may be a box frame or may be a pipe frame. The same may be said of the left down frame 81L/83L.
(2) In the foregoing embodiment, the outer shape of a section of each of the right main frame 6R and left main frame 6L is oblong and approximately quadrangular or approximately pentagonal. Alternatively, the outer shape of a section of each of the right main frame 6R and left main frame 6L may be changed to oblong and approximately polygonal. Or the outer shape of a section of each of the right main frame 6R and left main frame 6L may be changed to approximately circular as in the modified embodiment shown in Fig. 11.
(3) In the foregoing embodiment, the body frame 3 is not disposed forward of the upper wall 45T of the head cover 45, and does not overlap the upper wall 45T in the front view of the vehicle. Alternatively, the body frame 3 may be disposed forward of the upper wall 45T. The body frame 3 may overlap the upper wall 45T in the front view of the vehicle. In this modified embodiment also, the forward inclination angle θ of the cylinder unit 33 may easily be selected, changed, or adjusted.
(4) In the foregoing embodiment, the front portion 45a of the head cover 45 does not overlap the right main frame 6R or the left main frame 6L in the side view of the vehicle, and part of the rear portion 45b of the head cover 45 overlaps the right main frame 6R in the side view of the vehicle. Alternatively, in the side view of the vehicle, for example, the whole of the head cover 45 does not need to overlap the right main frame 6R or the left main frame 6L. In the side view of the vehicle, for example, the whole of the rear portion 45b of the head cover 45 does not need to overlap the right main frame 6R or the left main frame 6L.
(5) In the foregoing embodiment, each of the right main frame 6R and left main frame 6L extends to a position rearward of the engine 11 in the side view of the vehicle. Alternatively, each of the right main frame 6R and left main frame 6L does not need to extend to a position rearward of the engine 11 in the side view of the vehicle.
(6) In the foregoing embodiment, the whole of the head tube 4 is disposed forward and upward of the engine 11. Alternatively, at least part of the head tube 4 may be disposed forward and upward of the engine 11. For example, only part of the head tube 4 may be disposed upward of the upper end of the engine 11, and the other part of the head tube 4 disposed in a position lower than the upper end of the engine 11.
(7) In the foregoing embodiment, the whole of the actuator body 73 overlaps the head cover 45 in the side view of the vehicle. Alternatively, only part of the actuator body 73 may overlap the head cover 45 in the side view of the vehicle. For example, the actuator body 73 may overlap both the head cover 45 and cylinder head 41 in the side view of the vehicle.
(8) In the foregoing embodiment, the whole of the actuator body 73 is located rearward of the cylinder axis L in the side view of the vehicle. Alternatively, the center P of the actuator body 73 may be located rearward of the cylinder axis L in the side view of the vehicle, and part of the actuator body 73 (which, however, does not include the center P) may be located forward of the cylinder axis L in the side view of the vehicle.
(9) In the foregoing embodiment, the actuator body 73 includes an electromagnetic solenoid. Alternatively, the actuator body 73 may include an electric or hydraulic drive mechanism. For example, the actuator body 73 may include an electric motor. Or the actuator body 73 may include an oil pump (hydraulic pump).
(10) In the foregoing embodiment, the mounting element 74 may be disposed such that the whole of the mounting element 74 overlaps neither the right main frame 6R nor the left main frame 6L in the side view of the vehicle. This can further improve the maintainability of the actuator 72. Or part of the mounting element 74 may overlap at least either the right main frame 6R or the left main frame 6L in the side view of the vehicle.

In the foregoing embodiment, the fastening members 75 fastened to the mounting element 74 to fix the mounting element 74 to the head cover 45 may not overlap either the right main frame 6R or the left main frame 6L in the side view of the vehicle. This can further improve the maintainability of the actuator 72. Or part of the fastening members 75 may overlap at least either the right main frame 6R or the left main frame 6L in the side view of the vehicle.
(11) In the foregoing embodiment, the actuator body 73 is attached to the right wall 45R of the head cover 45. Alternatively, the actuator body 73 may be attached to the left wall of the head cover 45.
(12) The foregoing embodiment has exemplified the constructions of the valve operating device 51 and variable valve mechanism 71. Alternatively, the valve operating device 51 and variable valve mechanism 71 may basically be constructed as follows, respectively.

That is, the valve operating device 51 has the cam shaft 56 disposed in the valve operating chamber 46 and rotatably supported by the cylinder head 41, the plurality of inlet cams (57, 58) rotatable with the cam shaft 56, and the pressing members (adjuster screws 68, 69) arranged in the valve operating chamber 46 for rocking in response to rotation of at least one of the inlet cams (57, 58) to drive the inlet valves 53. The variable valve mechanism 71 has the connecting pin 77 disposed in the valve operating chamber 46 for switching the inlet cams (57, 58) which rock the pressing members, and the actuator 72 for driving the connecting pin 77.

Thus, the valve operating device 51 and variable valve mechanism 71 in the embodiment may be changed as follows. That is, in the embodiment, the valve operating device 51 has the pressing members (68, 69) supported by the first inlet rocker arm 63. In place of these pressing members (68, 69), the valve operating device 51 may have a first pressing member supported by the first inlet rocker arm 63, and a second pressing member supported by the second inlet rocker arm 65. In this case, the inlet valves 53 may include a first inlet valve driven by the first pressing member, and a second inlet valve driven by the second pressing member.

In this modified embodiment, when the connecting pin 77 is in the connecting position, the first inlet rocker arm 63 and second inlet rocker arm 65 are connected. The first inlet rocker arm 63, second inlet rocker arm 65, first pressing member, and second pressing member rock together in response to rotation of the second inlet cam 58. The rocking of the first pressing member causes the first pressing member to drive the first inlet valve, and the rocking of the second pressing member causes the second pressing member to drive the second inlet valve. When the connecting pin 77 is in the release position, the connection of the first inlet rocker arm 63 and second inlet rocker arm 65 is cancelled. The first inlet rocker arm 63 and first pressing member rock together in response to rotation of the first inlet cam 57, and the second inlet rocker arm and second pressing member rock together in response to rotation of the second inlet cam 58. The rocking of the first pressing member causes the first pressing member to drive the first inlet valve, and the rocking the second pressing member causes the second pressing member to drive the second inlet valve. Thus, this modified embodiment also can conveniently change the opening and closing conditions of the valve operating device 51 (first inlet valve and second inlet valve).

Or the pressing members (68, 69) and connecting pin 77 described in the embodiment may be changed as follows. That is, the valve operating device 51 has pressing members attachable to and detachable from the first inlet rocker arm 63 and attachable to and detachable from the second inlet rocker arm 65. A connecting pin is provided movable to a first connecting position and a second connecting position. When the connecting pin is in the first connecting position, the connecting pin connects the first inlet rocker arm 63 and pressing member, and cancels connection of the second inlet rocker arm 65 and pressing member. When the connecting pin is in the second connecting position, it connects the second inlet rocker arm 65 and pressing member and cancels connection of the first inlet rocker arm 63 and pressing member. The actuator 72 moves the connecting pin to the first connecting position and the second connecting position.

According to this modified embodiment, when the connecting pin is in the first connecting position, the first inlet rocker arm 63 and pressing member are connected, and the connection of the second inlet rocker arm 65 and pressing member is cancelled. The first inlet rocker arm 63 and pressing member rock together in response to rotation of the first inlet cam 57. The rocking of the pressing member causes the pressing member to drive the inlet valves 53. When the connecting pin is in the second connecting position, the second inlet rocker arm 65 and pressing member are connected, and the connection of the first inlet rocker arm 63 and pressing member is cancelled. The second inlet rocker arm 65 and pressing member rock together in response to rotation of the second inlet cam 58. The rocking of the pressing member causes the pressing member to drive the inlet valves 53. Thus, this modified embodiment also can conveniently change the opening and closing conditions of the valve operating device 51 (inlet valves 53).
(13) In the foregoing embodiment, the engine 11 is a single-cylinder engine. Alternatively, the engine 11 may be a multi-cylinder engine. That is, the cylinder member 35 may have two or more cylinder bores 36.
(14) In the foregoing embodiment, the engine 11 is the water-cooled type. Alternatively, the engine 11 may be the air-cooled type.
(15) In the foregoing embodiment, the number of inlet valves 53 is two. Alternatively, the number of inlet valves 53 may be one. For example, the number of inlet valves 53 may be three or more. The number of exhaust valves may also be changed similarly.
(16) In the foregoing embodiment, the valve operating device 51 is the SOHC (Single Overhead Camshaft) type. Alternatively, the valve operating device 51 may be the DOHC (Double Overhead Camshaft) type.
(17) In the foregoing embodiment, the straddled vehicle 1 has been illustrated as an example of street type vehicles. Alternatively, the straddled vehicle 1 may be changed to vehicles of other types, such as the sport type or a vehicle for irregular grounds (ALL-TERRAIN VEHICLE).
(18) In the foregoing embodiment, the number of front wheels 19 is one. Alternatively, the number of front wheels 19 may be changed to two. In the foregoing embodiment, the number of rear wheels 16 is one. Alternatively, the number of rear wheels 16 may be changed to two.
(19) In the foregoing embodiment, the engine (internal combustion engine) 11 has been illustrated as power source. Alternatively, the straddled vehicle 1 may have an electric motor as power source.
(20) The foregoing embodiment and each of the modified embodiments described in paragraphs (1) to (19) above may be further varied as appropriate by replacing or combining their constructions with the constructions of the other modified embodiments.

## Claims

1. A straddled vehicle (1) comprising:
an engine (11) having a cylinder unit (33); and
a body frame (3) for supporting the engine (11);
the body frame (3) including:
a head tube (4) having at least part thereof located forward and upward of the engine (11);
a right frame (5R) extending rearward and downward from the head tube (4); and
a left frame (5L) disposed leftward of the right frame (5R) and extending rearward and downward from the head tube (4);
the right frame (5R) including a right main frame (6R, 82R) disposed above the engine (11) in a side view of the vehicle;
the left frame (5L) including a left main frame (6L, 82L) disposed above the engine (11) in the side view of the vehicle;
the cylinder unit (33) including:
a cylinder member (35) having a cylinder bore (36) centering on a cylinder axis (L) extending upward and forward at an angle of 45 degrees or larger to a horizontal line in the side view of the vehicle;
a cylinder head (41) connected to an upper part of the cylinder member (35), and having ports (42) formed therein for communicating with the cylinder bore (36);
a head cover (45) connected to an upper part of the cylinder head (41), and forming a valve operating chamber (46) with the cylinder head (41);
a valve operating device (51) disposed in the valve operating chamber (46) for opening and closing the ports (42); and
a variable valve mechanism (71) having an actuator (72) for changing opening and closing conditions of the valve operating device (51);
the actuator (72) having an actuator body (73) disposed outside the valve operating chamber (46), wherein
the body frame (3) is not disposed forward of a front wall (35F, 41F, 45F, F1) of each of the cylinder member (35), the cylinder head (41), and the head cover (45), and does not overlap the each front wall (35F, 41F, 45F, F1) in a front view of the vehicle;
the actuator body (73) is attached to the head cover (45);
the actuator body (73) has a center (P) thereof located rearward of the cylinder axis (L) in the side view of the vehicle; and **characterised in that**,
the cylinder unit (33) is inclined so that the actuator body (73) overlap neither the right main frame (6R, 82R) nor the left main frame (6L, 82L) in the side view of the vehicle.

2. A straddled vehicle (1) according to claim 1, wherein, in the side view of the vehicle, the actuator body (73) is spaced in an up-down direction (Z) from one of the right main frame (6R, 82R) and the left main frame (6L, 82L).

3. A straddled vehicle (1) according to claim 1 or 2, wherein, in the side view of the vehicle, the actuator body (73) is spaced in a direction along the cylinder axis (L) from one of the right main frame (6R, 82R) and the left main frame (6L, 82L).

4. A straddled vehicle (1) according to any one of claims 1 to 3, wherein, in plan view, the actuator body (73) overlaps one of the right main frame (6R, 82R) and the left main frame (6L, 82L).

5. A straddled vehicle (1) according to any one of claims 1 to 4, wherein the cylinder head (41) and the head cover (45) form a cam chain chamber (47) therebetween; the cam chain chamber (47) is disposed on one side of the valve operating chamber (46) in a transverse direction (Y) of the straddled vehicle (1); and
the actuator body (73) is disposed on the other side of the valve operating chamber (46) in the transverse direction (Y).

6. A straddled vehicle (1) according to any one of claims 1 to 5, wherein the body frame (3) includes a cross member (9) extending over the engine (11) in a transverse direction (Y) of the straddled vehicle (1) to connect the right main frame (6R, 82R) and the left main frame (6L, 82L); and
the engine (11) is supported only by the right frame (5R), the left frame (5L), and the cross member (9).

7. A straddled vehicle (1) according to any one of claims 1 to 6, wherein the straddled vehicle (1) comprises fastening members (27) fastened to the engine (11) for the body frame (3) to support the engine (11); and
the fastening members (27) are visible in the side view of the vehicle.

8. A straddled vehicle (1) according to any one of claims 1 to 7, wherein the right main frame (6R, 82R) has a sectional outer shape which is oblong and approximately polygonal; and
the left main frame (6L, 82L) has a sectional outer shape which is oblong and approximately polygonal.

9. A straddled vehicle (1) according to any one of claims 1 to 8, wherein the head cover (45) includes:
a front portion (45a) located forward of the cylinder axis (L) in the side view of the vehicle; and
a rear portion (45b) located rearward of the cylinder axis (L) in the side view of the vehicle;
in the side view of the vehicle, the front portion (45a) of the head cover (45) does not overlap the right main frame (6R, 82R) or the left main frame (6L, 82L); and
in the side view of the vehicle, part of the rear portion (45b) of the head cover (45) overlaps at least one of the right main frame (6R, 82R) and the left main frame (6L, 82L).

10. A straddled vehicle (1) according to any one of claims 1 to 9, wherein the valve operating device (51) includes inlet valves (53) arranged rearward of the cylinder axis (L) in the side view of the vehicle for opening and closing the ports (42); and
the actuator (72) is configured to change opening and closing conditions of the inlet valves (53).

11. A straddled vehicle (1) according to any one of claims 1 to 10, wherein the actuator (72) includes a mounting element (74) disposed outside the valve operating chamber (46), and connected to the actuator body (73), for attaching the actuator body (73) to the head cover (45).

12. A straddled vehicle (1) according to any one of claims 1 to 11, wherein the actuator body (73) includes an electromagnetic solenoid.

13. A straddled vehicle (1) according to any one of claims 1 to 12, wherein the number of cylinder bores (36) of the cylinder member (35) is one.

14. A straddled vehicle (1) according to any one of claims 1 to 13, wherein the straddled vehicle (1) comprises an air cleaner (23) disposed above the engine (11).

15. A straddled vehicle (1) according to any one of claims 1 to 14, wherein the straddled vehicle (1) comprises a fuel tank (21) disposed above the engine (11).

## Patentansprüche

1. Ein Spreiz-Sitz-Fahrzeug (1), das umfasst:
einen Motor (11) der eine Zylinder-Einheit (33) hat; und
einen Körper-Rahmen (3) zur Lagerung des Motors (11);
der Körper-Rahmen (3) beinhaltet:
ein Kopf-Rohr (4), das zumindest einen Teil desselben nach vorne und oben von dem Motor (11) angeordnet hat;
einen rechten Rahmen (5R), der sich nach hinten und unten von dem Kopf-Rohr (4) erstreckt; und
einen linken Rahmen (5L), der links von dem rechten Rahmen (5R) positioniert ist und sich nach hinten und unten von dem Kopf-Rohr (4) erstreckt;
der rechte Rahmen (5R) beinhaltet einen rechten Haupt-Rahmen (6R, 82R), der oberhalb des Motors (11) in einer Seiten-Ansicht des Fahrzeuges positioniert ist;
der linke Rahmen (5L) beinhaltet einen linken Haupt-Rahmen (6L, 82L), der oberhalb des Motors (11) in der Seiten-Ansicht des Fahrzeugs positioniert ist;
die Zylinder-Einheit (33) beinhaltet:
ein Zylinder-Element (35), das eine Zylinder-Bohrung (36) hat, die an einer Zylinder-Achse (L) zentriert ist, die sich nach oben und vorne unter einem Winkel von 45° oder größer zu einer Horizontal-Linie in einer Seiten-Ansicht des Fahrzeuges erstreckt;
einen Zylinder-Kopf (41), der an einem oberen Teil des Zylinder-Elements (35) verbunden ist, und Anschlüsse (42) hat, die darin zur Kommunikation mit der Zylinder-Bohrung (36) ausgebildet sind;
eine Kopf-Abdeckung (45), die an einem oberen Teil des Zylinder-Kopfs (41) verbunden ist, und eine Ventil-Betätigungs-Kammer (46) mit dem Zylinder-Kopf (41) bildet;
eine Ventil-Betätigungs-Vorrichtung (51) zum Öffnen und Schließen der Anschlüsse (42), die in der Ventil-Betätigungs-Kammer (46) positioniert ist; und
einen Variabel-Ventil-Mechanismus (71), der einen Aktuator (72) zur Änderung von Öffnungs- und Schließ-Bedingungen der Ventil-Betätigungs-Vorrichtung (51) hat;
der Aktuator (72) hat einen Aktuator-Körper (73), der außerhalb der Ventil-Betätigungs-Kammer (46) positioniert ist, wobei
der Körper-Rahmen (3) nicht vor einer vorderen Wand (35F, 41F, 45F, F1) von jedem von dem Zylinder-Element (35), dem Zylinder-Kopf (41), und der Kopf-Abdeckung (45) positioniert ist, und nicht mit jeder vorderen Wand (35F, 41F, F1) in einer VorderAnsicht des Fahrzeugs überlappt;
der Aktuator-Körper (73) ist an der Kopf-Abdeckung (45) angebracht;
der Aktuator-Körper (72) hat eine Mitte (P) desselben, angeordnet hinter der Zylinder-Achse (L) in der Seiten-Ansicht des Fahrzeugs, und **dadurch gekennzeichnet, dass** die Zylinder-Einheit (33) geneigt ist, sodass der Aktuator-Körper (73) weder den rechten Haupt-Rahmen (6R, 28R) noch den linken Haupt-Rahmen (6L, 82L) in der Seiten-Ansicht des Fahrzeugs überlappt.

2. Ein Spreiz-Sitz-Fahrzeug (1) gemäß Anspruch 1, wobei in der Seiten-Ansicht des Fahrzeugs, der Aktuator-Körper (73) in einer Oben-Unten-Richtung (Z) von einem von dem rechten Haupt-Rahmen (6R, 82R) und dem linken Haupt-Rahmen (6L, 82L) beabstandet ist.

3. Ein Spreiz-Sitz-Fahrzeug (1) gemäß Anspruch 1 oder 2, wobei in der Seiten-Ansicht des Fahrzeugs, der Aktuator-Körper (73) in einer Richtung entlang der Zylinder-Achse (L) von einem von dem rechten Haupt-Rahmen (6R, 82R) und dem linken Haupt-Rahmen (6L, 82L) beabstandet ist.

4. Ein Spreiz-Sitz-Fahrzeug (1) gemäß zu irgendeinem der Ansprüche 1 bis 3, wobei in einer Draufsicht, der Aktuator-Körper (73) mit einem von dem rechten Haupt-Rahmen (6R, 82R) und dem linken Haupt-Rahmen (6L, 82L) überlappt.

5. Ein Spreiz-Sitz-Fahrzeug (1) gemäß irgendeinem der Ansprüche 1 bis 4, wobei der Zylinder-Kopf (41) und die Kopf-Abdeckung (45) eine Nocken-Ketten-Kammer (47) dazwischen bilden;
die Nocken-Ketten-Kammer (47) ist an einer Seite von der Ventil-Betätigungs-Kammer (46) in einer Quer-Richtung (Y) des Spreiz-Sitz-Fahrzeuges (1) positioniert; und
der Aktuator-Körper (73) ist an der anderen Seite der Ventil-Betätigungs-Kammer (46) in der Quer-Richtung (Y) positioniert.

6. Ein Spreiz-Sitz-Fahrzeug (1) gemäß irgendeinem der Ansprüche 1 bis 5, wobei der Körper-Rahmen (3) ein Quer-Element (9) beinhaltet, das sich über dem Motor (11) in einer Quer-Richtung (Y) des Spreiz-Sitz-Fahrzeugs (1) erstreckt, um den rechten Haupt-Rahmen (6R, 82R) und den linken Haupt-Rahmen (6L, 82L) zu verbinden; und der Motor (11) ist nur durch den rechten Rahmen (5R), den linken Rahmen (5L) und das Quer-Element (9) gelagert.

7. Ein Spreiz-Sitz-Fahrzeug (1) gemäß irgendeinem der Ansprüche 1 bis 6, wobei das Spreiz-Sitz-Fahrzeug (1) Befestigungs-Elemente (27) umfasst, die an dem Motor (11) befestigt sind, sodass der Körper-Rahmen (3) den Motor (11) befestigt; und
die Befestigungs-Elemente (27) sind in der Seiten-Ansicht des Fahrzeugs sichtbar.

8. Ein Spreiz-Sitz-Fahrzeug (1) gemäß irgendeinem der Ansprüche 1 bis 7, wobei der rechte Haupt-Rahmen (6R, 82R) eine Außen-Querschnitts-Form hat, die länglich und im Wesentlichen polygonal ist; und
der linke Haupt-Rahmen (6L, 82L) hat eine Außen-Querschnitts-Form, die länglich und im Wesentlichen polygonal ist.

9. Ein Spreiz-Sitz-Fahrzeug (1) gemäß irgendeinem der Ansprüche 1 bis 8, wobei die Kopf-Abdeckung (45) beinhaltet:
einen Vorder-Abschnitt (45a), der vor der Zylinder-Achse (L) in der Seiten-Ansicht des Fahrzeugs angeordnet ist; und
einen Rück-Abschnitt (45b), der hinter der Zylinder-Achse (L) in der Seiten-Ansicht des Fahrzeugs angeordnet ist;
in der Seiten-Ansicht des Fahrzeugs überlappen der Vorder-Abschnitt (45a) der Kopf-Abdeckung (45) den rechten Haupt-Rahmen (6R, 82R) oder den linken Haupt-Rahmen (6L, 82L) nicht; und
in der Seiten-Ansicht des Fahrzeugs überlappt ein Teil von dem Rück-Abschnitt (45b) der Kopf-Abdeckung (45) zumindest einem von dem rechten Haupt-Rahmen (6R, 82R) und dem linken Haupt-Rahmen (6L, 82L).

10. Ein Spreiz-Sitz-Fahrzeug (1) gemäß irgendeinem der Ansprüche 1 bis 9, wobei die Ventil-Betätigungs-Vorrichtung (51) Einlass-Ventile (53) beinhaltet, die hinter der Zylinder-Achse (L) in der Seiten-Ansicht des Fahrzeugs angeordnet sind, zum Öffnen und Schließen der Anschlüsse (42); und
der Aktuator (72) ist konfiguriert um die Öffnungs- und Schließ-Bedingungen der Einlass-Ventile (53) zu ändern.

11. Ein Spreiz-Sitz-Fahrzeug (1) gemäß irgendeinem der Ansprüche 1 bis 10, wobei der Aktuator (72) ein Montage-Element (74) beinhaltet, das außerhalb der Ventil-Betätigungs-Kammer (46) positioniert ist, und mit dem Aktuator-Körper (73) verbunden ist, um den Aktuator-Körper (73) an der Kopf-Abdeckung (45) anzubringen.

12. Ein Spreiz-Sitz-Fahrzeug (1) gemäß irgendeinem der Ansprüche 1 bis 11, wobei der Aktuator-Körper (73) ein elektromagnetisches Solenoid beinhaltet.

13. Ein Spreiz-Sitz-Fahrzeug (1) gemäß irgendeinem der Ansprüche 1 bis 12, wobei die Anzahl von Zylinder-Bohrungen (36) des Zylinder-Elements (35) eins ist.

14. Ein Spreiz-Sitz-Fahrzeug (1) gemäß irgendeinem der Ansprüche 1 bis 13, wobei das Spreiz-Sitz-Fahrzeug (1) einen Luft-Filter (23) beinhaltet, der oberhalb des Motors (11) positioniert ist.

15. Ein Spreiz-Sitz-Fahrzeug (1) gemäß irgendeinem der Ansprüche 1 bis 14, wobei das Spreiz-Sitz-Fahrzeug (1) einen Kraftstoff-Tank (21) umfasst, der oberhalb des Motors (11) positioniert ist.

## Revendications

1. Véhicule de type à selle (1) comprenant :
un moteur thermique (10) comportant une unité de cylindre (33), et
un cadre (3) supportant le moteur (11),
le cadre (3) incluant :
un tube de fourche (4) dont au moins un composant est situé vers l'avant et vers le haut du moteur (11),
un cadre droit (5R) s'étendant vers l'arrière et vers le bas à partir du tube de fourche (4), et
un cadre gauche (5L) disposé à la gauche du cadre droit (5R) et s'étendant vers l'arrière et vers le bas à partir du tube de fourche (4),
le cadre droit (5R) incluant un cadre principal droit (6R, 82R) disposé au-dessus du moteur (11) selon une vue latérale du véhicule,
le cadre gauche (5L) incluant un cadre principal gauche (6L, 82L) disposé au-dessus du moteur (11) selon la vue latérale du véhicule,
l'unité de cylindre (33) incluant :
un élément de cylindre (35) comportant un alésage de cylindre (36) se centrant sur un axe de cylindre (L) s'étendant vers le haut et vers l'avant à un angle de 45 degrés ou plus par rapport à l'horizontale selon la vue latérale du véhicule,
une culasse (41) reliée à une partie supérieure de l'élément de cylindre (35) et comportant des lumières (42) formées en elle en vue d'une communication avec l'alésage de cylindre (36),
un couvre culasse (45) relié à une partie supérieure de la culasse (41) et formant une chambre de distribution (46) avec la culasse (41),
un dispositif de commande de soupapes (51) disposé dans la chambre de distribution (46) dans le but d'ouvrir et fermer les lumières (42), et
un mécanisme de soupapes variables (71) comportant un actionneur (72) permettant de changer les conditions d'ouverture et de fermeture du dispositif de commande de soupapes (51),
l'actionneur (72) comportant un corps d'actionneur (73) disposé à l'extérieur de la chambre de distribution (46) dans lequel
le cadre (3) n'est pas disposé en avant de la paroi avant (35F, 41F, 45F, F1) de chaque élément de cylindre (35) de la culasse (41) et du couvre culasse (45), et il ne chevauche pas chaque paroi avant (35F, 41F, 45F, F1) selon une vue avant du véhicule,
le corps d'actionneur (73) est fixé au couvre culasse (45),
le corps d'actionneur (73) a son centre (P) situé à l'arrière de l'axe de cylindre (L) selon la vue latérale du véhicule, et **caractérisé en ce que**
l'unité de cylindre (33) est inclinée de telle sorte que le corps d'actionneur (73) ne chevauche ni le cadre principal droit (6R, 82R) ni le cadre principal gauche (6L, 82L) selon la vue latérale du véhicule.

2. Véhicule de type à selle (1) selon la revendication 1, dans lequel, selon la vue latérale du véhicule, le corps d'actionneur (73) est espacé dans la direction haut - bas (Z) de l'un du cadre principal droit (6R, 82R) et du cadre principal gauche (6L, 82L).

3. Véhicule de type à selle (1) selon la revendication 1 ou la revendication 2, dans lequel, selon la vue latérale du véhicule, le corps d'actionneur (73) est espacé dans la direction le long de l'axe de cylindre (L) de l'un du cadre principal droit (6R, 82R) et du cadre principal gauche (6L, 82L) .

4. Véhicule de type à selle (1) selon l'une quelconque des revendications 1 à 3, dans lequel, dans une vue en plan, le corps d'actionneur (73) chevauche l'un du cadre principal droit (6R, 82R) et du cadre principal gauche (6L, 82L).

5. Véhicule de type à selle (1) selon l'une quelconque des revendications 1 à 4, dans lequel la culasse (41) et le couvre culasse (45) forment une chambre de chaîne de came (47) entre eux,
la chambre de chaîne de came (47) est disposée sur un côté de la chambre de distribution (46) dans une direction transversale (Y) du véhicule à selle (1), et
le corps d'actionneur (73) est disposé sur l'autre côté de la chambre de distribution (46) dans la direction transversale (Y).

6. Véhicule de type à selle (1) selon l'une quelconque des revendications 1 à 5, dans lequel le cadre (3) inclut une traverse (9) s'étendant par-dessus le moteur (11) dans la direction transversale (Y) du véhicule à selle (1) afin de raccorder le cadre principal droit (6R, 82R) et le cadre principal gauche (6L, 82L), et
le moteur (11) n'est supporté que par le cadre droit (5R), le cadre gauche (5L) et la traverse (9).

7. Véhicule de type à selle (1) selon l'une quelconque des revendications 1 à 6, le véhicule à selle (1) comprenant des éléments de fixation (27) fixés au moteur (11) pour que le cadre (3) soutienne le moteur (11), et
les éléments de fixation (27) sont visibles selon la vue latérale du véhicule.

8. Véhicule de type à selle (1) selon l'une quelconque des revendications 1 à 7, dans lequel le cadre principal droit (6R, 82R) présente une forme externe en coupe qui est oblongue et approximativement polygonale, et
le cadre principal gauche (6L, 82L) présente une forme externe en coupe qui est oblongue et approximativement polygonale.

9. Véhicule de type à selle (1) selon l'une quelconque des revendications 1 à 8, dans lequel le couvre culasse (45) inclut :
une partie avant (45a) située à l'avant de l'axe de cylindre (L) selon la vue latérale du véhicule, et
une partie arrière (45b) située à l'arrière de l'axe de cylindre (L) selon la vue latérale du véhicule,
selon la vue latérale du véhicule, la partie avant (45a) du couvre culasse (45) ne chevauche pas le cadre principal droit (6R, 82R) ou le cadre principal gauche (6L, 82L), et
selon la vue latérale du véhicule, un composant de la partie arrière (45b) du couvre culasse (45) chevauche au moins l'un du cadre principal droit (6R, 82R) et du cadre principal gauche (6L, 82L).

10. Véhicule de type à selle (1) selon l'une quelconque des revendications 1 à 9, dans lequel le dispositif de commande de soupapes (51) inclut des soupapes d'admission (53) disposées à l'arrière de l'axe de cylindre (L) selon la vue latérale du véhicule dans le but d'ouvrir et fermer les lumières (42), et
l'actionneur (72) est configuré pour changer l'état d'ouverture et de fermeture des soupapes d'admission (53).

11. Véhicule de type à selle (1) selon l'une quelconque des revendications 1 à 10, dans lequel l'actionneur (72) inclut un élément de montage (74) disposé à l'extérieur de la chambre de distribution (46) et relié au corps d'actionneur (73) en vue de fixer le corps d'actionneur (73) au couvre culasse (45).

12. Véhicule de type à selle (1) selon l'une quelconque des revendications 1 à 11, dans lequel le corps d'actionneur (73) inclut une bobine solénoïde électromagnétique.

13. Véhicule de type à selle (1) selon l'une quelconque des revendications 1 à 12, dans lequel le nombre d'alésages de cylindre (36) de l'élément de cylindre (35) est un.

14. Véhicule de type à selle (1) selon l'une quelconque des revendications 1 à 13, le véhicule à selle (1) comprenant un filtre à air (23) disposé au-dessus du moteur (11).

15. Véhicule de type à selle (1) selon l'une quelconque des revendications 1 à 14, le véhicule à selle (1) comprenant un réservoir de carburant (21) disposé au-dessus du moteur (11) .
